# EUROPÄISCHE PATENTSCHRIFT

(11) **EP 2 384 950 B1**
(45) Veröffentlichungstag und Bekanntmachung des Hinweises auf die Patenterteilung: **01.06.2016**
(21) Anmeldenummer: 11165342.4
(22) Anmeldetag: 09.05.2011
(51) Int. Cl.: B62B 3/00

(54) **Transportwagen**
Conveyor trolley
Chariot de transport

(30) Priorität: 07.05.2010 DE 202010005402 U; 02.07.2010 DE 102010017709
(43) Veröffentlichungstag der Anmeldung: 09.11.2011
(73) Patentinhaber: Blickle Räder + Rollen GmbH & Co.KG, 72348 Rosenfeld (DE)
(72) Erfinder: Hölle, Rolf, 72348, Rosenfeld (DE); Schwarz, Michael, 72348, Rosenfeld (DE)
(74) Vertreter: Holzwarth-Rochford, Andreas

(56) Entgegenhaltungen:
- WO-A1-00/41924
- WO-A1-96/14217
- DD-A- 40 438
- DE-B- 1 067 475
- DE-C- 811 423
- DE-U- 1 888 885
- FR-A1- 2 216 800
- FR-A1- 2 568 840
- GB-A- 2 366 546
- US-A- 2 582 000

## Beschreibung

Die vorliegende Erfindung betrifft einen Transportwagen gemäß dem Oberbegriff des Patentanspruchs 1.

Insbesondere in Industriebetrieben, in denen ein Fließband eingesetzt wird um ein Produkt herzustellen, beispielsweise in der Automobilindustrie, werden an dem Fließband benötigte Produktkomponenten mittels Zügen, die aus einer Vielzahl von Transportwagen bestehen, an das Fließband transportiert bzw. an die jeweilige Arbeitsstation an dem Fließband. Diese Transportwagen weisen jeweils eine Deichsel auf, die es ermöglicht, den jeweiligen Transportwagen mit einem Zuggerät bzw. mit weiteren Transportwagen zu verbinden. Ein jeweiliger Transportwagen in einem solchen Zug wird auch als Trailer bezeichnet. Weitere Beispiele für derartige Transportwagen sind Hubwagen und einzeln manövrierte Wagen wie Speisewagen, Hordengestellwagen, Schubwagen oder dergleichen.

Um eine bestmögliche Raumausnutzung in einem Industriebetrieb zu erreichen, ist man bestrebt, die Freiräume, die notwendig sind, um entsprechende Transportwagen in dem Industriebetrieb zu bewegen, so gering wie möglich zu halten. Insbesondere um den Platzbedarf für derartige Transportwege in Kurven- bzw. Kreuzungsbereichen so gering wie möglich zu halten, ist es erstrebenswert, dass die Transportwagen eine größtmögliche Wendigkeit aufweisen, insbesondere einen kleinstmöglichen Wendekreis realisieren können.

Gleichzeitig soll eine größtmögliche Stabilität des Transportwagens, insbesondere hinsichtlich eines Umkippens erreicht werden und ein konstruktiv einfacher Aufbau, insbesondere für eine Lenkungssteuerung erreicht werden. Ferner soll die maximale Ausdehnung des Transportwagens durch die Außenkontur einer Tragstruktur bzw. einer Transportfläche begrenzt werden, also keine Räder oder Rollen bei einer Kurvenfahrt oder einer Querfahrt oder die Deichsel in einer Parkposition über die Außenkanten überstehen. Auch soll eine größtmögliche Stabilität des Transportwagens bei einer Bewegung in einer Hauptfahrtrichtung, aber auch in eine Richtung senkrecht zu dieser Hauptfahrtrichtung, also eine Querrichtung, sichergestellt werden. So werden beispielsweise mehrere Transportwagen eines Zugs so im Bereich eines Fließbands positioniert, dass die jeweiligen Transportwagen vor den jeweiligen Arbeitsstationen positioniert sind, jedoch noch in Richtung des Fließbands zu bewegen sind. Dazu werden die Transportwagen voneinander entkoppelt und jeweils in eine Querrichtung zu der Hauptfahrtrichtung bewegt. Bei dieser Bewegung ist darüber hinaus auch eine größtmögliche Manövrierfähigkeit erwünscht, wobei gleichzeitig eine größtmögliche Kippsicherheit gewährleistet sein soll. Schließlich soll eine für eine Person ergonomisch bestmögliche Haltung bei einer Be- und Entladung ermöglicht werden und alle Bereiche der Tragebene sollen dabei von der Person erreichbar sein, am besten von einer Be- und Entladeposition die gesamte Tragebene erreichbar sein.

Um die Manövrierfähigkeit zu vergrößern, insbesondere eine Minimierung eines Wendekreises eines Transportwagens zu erreichen, wurde bereits im Stand der Technik vorgeschlagen, dass bei bis zu diesem Zeitpunkt verwendeten Transportwagen, bei denen in einer Hauptfahrtrichtung vorne zwei Lenkrollen, die im wesentlichen frei drehbar um eine jeweilige Lenkachse sind, und im hinteren Bereich des Transportwagens zumindest zwei Bockrollen, d. h. zwei Rollen, die um eine Rollenachse drehbar, jedoch um eine senkrechte zu der Rollenachse verlaufende Lenkachse nicht drehbar sind, angeordnet sind, die zwei Lenkrollen und die zwei Bockrollen durch vier Lenkrollen ersetzt werden. Dazu wurde vorgeschlagen, dass die vier Lenkrollen zwangsgelenkt werden, also mit einer Deichsel derartig über eine Lenkungsvorrichtung verbunden werden, dass eine Drehung der Deichsel um eine Deichseldrehachse zu einer Drehung der jeweiligen Lenkrollen um die jeweilige Lenkachse führen.

Ferner vertreibt die Firma Eurocontainer SRL, Italien einen in Figur 1 in einer Aufsicht auf die Unterseite dargestellten und in der WO 2010/134038 A1 beschriebenen Transportwagen. Dieser Transportwagen weist einen Tragrahmen 1, durch den eine Tragebene 3, die gleichzeitig als Transportebene für ein mit dem Transportwagen zu transportierendes Gut dient, aufgespannt wird. Der Transportwagen 1 umfasst ferner eine Deichsel 5 sowie eine Kupplungsvorrichtung 7, um eine Deichsel eines weiteren Transportwagens mit dem Transportwagen zu verbinden. Die Deichsel 5 ist einstückig mit einem um eine Drehachse 9 drehbaren Drehschemel 11 ausgebildet. Auf dem Drehschemel 11 sind ferner Bockrollen 13 befestigt. Über eine Lenkungsvorrichtung in Form einer Kettenlenkung 15 wird bei einer Drehung der Deichsel 5 um die Drehachse 9 ein zweiter Drehschemel 17 um eine zweite Drehachse 19 gedreht. An dem Drehschemel 17 sind zwei Bockrollen 21 sowie eine frei drehbare Lenkrolle 23 befestigt. Ferner ist im vorderen Bereich der Deichsel 5 eine weitere, frei drehbare Lenkrolle 25 angeordnet.

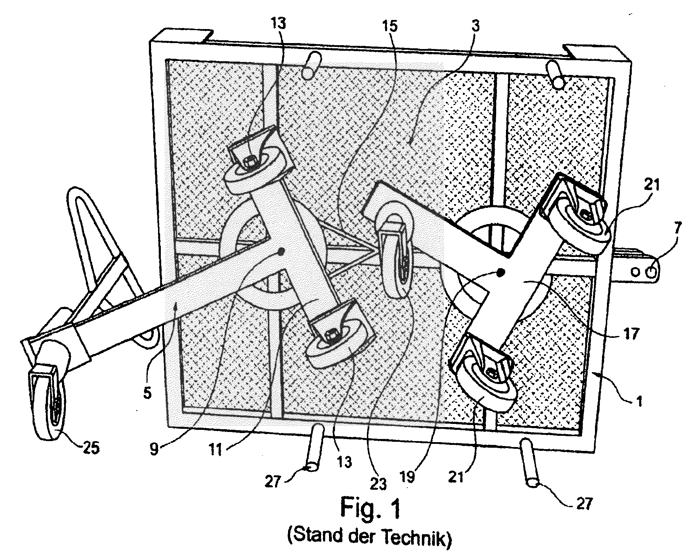

Nachteilig an diesem Transportwagen ist jedoch, dass eine Vielzahl von Rollen, nämlich sechs Rollen in Form der zwei Lenkrollen 23, 25 und der vier Bockrollen, 13, 21, verwendet werden, was zu einem kostenaufwendigen Aufbau führt. Darüber hinaus führt auch die Verwendung der Drehschemel 11, 17 zu einem konstruktiv aufwendigen und damit kostenaufwendigen und fehleranfälligen Aufbau. Gleichzeitig wird durch die Verwendung der insgesamt sechs Rollen bei einer Lenkbewegung mittels der Deichsel 5 eine Bewegung aller sechs Rollen notwendig, was zu hohen Lenkkräften führt. Weiterhin führt die Verwendung von sechs Rollen zu einer statischen Überbestimmung, wodurch es bei ebenen Untergründen zur Ausbildung von Spannungen innerhalb der Deichsel 5 als auch der Drehschemel 17, 11 kommt und Rollen den Bodenkontakt verlieren. Darüber hinaus führt die einstückige Ausbildung der Deichsel 5 und des Drehschemels 11 dazu, dass die Zugstange bzw. Deichsel über die Außenkontur des Transportwagens, insbesondere die Tragebene 3 hinausragt. Dies ist sowohl der Fall bei einer Bewegung des Transportwagens in einer Hauptbewegungsrichtung in Figur 1 nach links als auch bei einer Querbewegung, bei der die Deichsel 5 in eine Richtung nach oben bzw. unten in Figur 1 um die Drehachse 9 gedreht wird. Aufgrund der Anordnung des Drehschemels 17 im zentralen hinteren Bereich des Tragrahmens 1 ist es nicht möglich, eine Aussparung, in die eine Person zur Be- und Entladung des Transportwagens treten kann, auszubilden, so dass darüber hinaus nicht immer eine ergonomisch beste Position der Person bei der Be- und Entladung sichergestellt werden kann. Es sind Stützen 27 an dem Tragrahmen 1 zur Stapelung mehrerer Transportwagen vorgesehen.

Weitere Transportwagen sind aus der DE 1 067 475 und US 2,582,000 bekannt.

Die DE 1 067 475 offenbart einen einen Mikrophonbalken tragenden Studiowagen. Es wird vorgeschlagen, dass der Studiowagen drei Räder oder Radsätze aufweist, die an den Scheitelpunkten eines als Dreieck ausgebildeten Fahrgestells drehbar angeordnet sind. Ferner ist ein Mittel vorgesehen, durch welches entweder nur eine der Achsen der Rädersätze zwangsgelenkt wird oder alle drei Achsen untereinander zwecks Durchführung gemeinschaftlicher Drehung für seitliche Bewegungen des Wagens verbunden sind.

Die US 2,582,000 offenbart einen handbetriebenen Wagen. Es wird vorgeschlagen, dass drei Rollenpaare hintereinander angeordnet sind, wobei die in der Mitte liegenden Rollenpaare zwangsgelenkte Lenkrollen darstellen, während die davor und dahinter angeordneten Lenkrollenpaare frei drehbare Lenkrollen sind.

Schließlich offenbart die DD 40438 einen gattungsgemäßen Transportwagen in Form eines vierrädrigen Fahrzeugs. Bei diesem sind die Vorderräder mit senkrechten Lagerzapfen schwenkbar gelagert. Es wird vorgeschlagen, dass eine Deichsel derart schwenkbar gelagert ist, dass bei einer Drehung der Deichsel über Zahnketten eine Drehung an die Vorderräder sowie die Hinterräder übertragen wird.

Es ist Aufgabe der vorliegenden Erfindung, den gattungsgemäßen Transportwagen derartig weiterzuentwickeln, dass die Nachteile des Standes der Technik überwunden werden, insbesondere ein konstruktiv einfacher Transportwagen bereitgestellt wird, welcher eine bestmögliche Manövrierfähigkeit, insbesondere einen kleinstmöglichen Wendekreis und eine verbesserte Stabilität, insbesondere gegen eine Kippbewegung, aufweist, einer Bedienperson eine ergonomisch beste Position bei einer Be- und Entladung ermöglicht wird, konstruktiv einfach und damit kostengünstig und fehlerunanfällig aufgebaut ist, also auch eine verringerte Lenkkraft im Vergleich zu dem aus dem Stand der Technik bekannten Transportwagen aufweist.

Diese Aufgabe wird erfindungsgemäß durch die kennzeichnenden Merkmale des Patentanspruchs 1 gelöst.

Weiterhin kann ein erfindungsgemäßer Transportwagen gekennzeichnet sein durch eine Vielzahl von dritten Lenkrollen.

Dabei kann insbesondere vorgesehen sein, dass die Deichseldrehachse, die erste Lenkachse, die zweite Lenkachse und/oder die dritte Lenkachse im wesentlichen senkrecht durch die Tragebene verläuft bzw. verlaufen, die erste Lenkrolle, die zweite Lenkrolle, die dritte Lenkrolle, insbesondere die erste dritte Lenkrolle und/oder die zweite dritte Lenkrolle, und/oder die Deichsel zumindest bereichsweise auf einer zur Aufnahme von Gütern abgewandten ersten Seite des Tragrahmens und/oder der Tragebene angeordnet ist bzw. sind und/oder in der Tragebene und/oder dem Tragrahmen zumindest eine Aussparung, insbesondere in Form einer Eintrittsöffnung für eine Be- und Entladung des Transportwagens, ausgebildet ist und/oder die Tragebene und/oder der Tragrahmen, insbesondere parallel oder senkrecht zu der Hauptfahrtrichtung, eine C-förmige, U-förmige, V-förmige, W-förmige, F-förmige und/oder H-förmige Grundfläche aufweist bzw. aufweisen.

Weiterhin wird mit der Erfindung vorgeschlagen, dass die Deichsel mittels zumindest einer Fixiereinrichtung in zumindest einer vorbestimmten Drehposition bezüglich der Deichseldrehachse, insbesondere relativ zu der Hauptfahrtrichtung, fixierbar ist, vorzugsweise in zumindest einer ersten Drehposition, in der eine erste Rollenachse der ersten Lenkrolle und eine zweite Rollenachse der zweiten Lenkrolle und/oder eine dritte Rollenachse der dritten Lenkrolle, insbesondere eine erste dritte Rollenachse der ersten dritten Lenkrolle und eine zweite dritte Rollenachse der zweiten dritten Lenkrolle im wesentlichen parallel zu der Hauptfahrtrichtung verlaufen und/oder in zumindest einer zweiten Drehposition, in der die erste Rollenachse und die zweite Rollenachse und/oder die dritte Rollenachse, insbesondere im wesentlichen senkrecht zu der Hauptfahrtrichtung verlaufen.

Besonders bevorzugte Ausführungsformen eines erfindungsgemäßen Transportwagens können dadurch gekennzeichnet sein, dass die Lenkungsvorrichtung zumindest ein Lenkungsglied, wie zumindest eine Kette, zumindest einen Riemen, zumindest ein Seil, zumindest einen Draht, zumindest ein Stahlseil, zumindest ein Zahnradgetriebe, zumindest eine Übertragungswelle und/oder zumindest ein Gestänge, insbesondere Lenkgestänge, umfasst, wobei vorzugsweise mittels zumindest eines mit der Deichsel drehmitnahmesicher in Wirkverbindung stehenden, insbesondere verbundenen, Deichsel-Verbindungselementes eine Bewegung der Deichsel auf das Lenkungsglied übertragbar ist und/oder mittels zumindest eines drehmitnahmesicher mit der ersten Lenkrolle und/oder der zweiten Lenkrolle in Wirkverbindung stehenden Verbindungselementes, insbesondere eines drehmitnahmesicher mit der ersten Lenkrolle verbundenen ersten Verbindungselementes auf die erste Lenkrolle und/oder mittels zumindest eines drehmitnahmesicher mit der zweiten Lenkrolle verbundenen zweiten Verbindungselementes auf die zweite Lenkrolle, eine Bewegung des Lenkungsgliedes übertragbar ist, wobei insbesondere das Lenkungsglied mehrteilig, insbesondere als mehrere getrennte Ketten, Riemen, Drähte, Stahlseilen, Zahnradgetriebe, Übertragungswellen und/oder Gestänge ausbildbar ist, vorzugsweise mittels eines ersten Lenkungsgliedteils eine Bewegung von der Deichsel auf ein erstes Lenkrollenelement übertragbar ist und mittels eines zweiten Lenkungsgliedteils eine Bewegung der Deichsel auf ein von dem ersten Lenkrollenelement abweichendes Lenkrollenelement übertragbar ist, wobei das Lenkrollenelement insbesondere die erste Lenkrolle und/oder die zweite Lenkrolle ist.

Zusätzlich kann vorgesehen sein, dass die Lenkungsvorrichtung zumindest eine Umlenkeinrichtung, insbesondere umfassend zumindest ein Umlenkrad, eine Umlenkrolle und/oder Umlenkgetriebe, umfasst, wobei vorzugsweise mittels der Umlenkeinrichtung das zwischen einem ersten Lenkungselement, wie der Deichsel, der ersten Lenkrolle oder der zweiten Lenkrolle, und einem zweiten Lenkungselement, wie der ersten Lenkrolle, der zweiten Lenkrolle oder der Deichsel, verlaufende Lenkungsglied zumindest bereichsweise entlang einer von einer direkten Verbindungslinie zwischen dem ersten Lenkungselement und dem zweiten Lenkungselement abweichenden Führungsstrecke geführt wird.

Dabei ist besonders bevorzugt, dass zumindest eine entlang des Verlaufs des Lenkungsgliedes zwischen der Deichsel und der ersten Lenkrolle angeordnete erste Umlenkeinrichtung, zumindest eine entlang des Verlaufs des Lenkungsgliedes zwischen der zweiten Lenkrolle und der Deichsel angeordnete zweite Umlenkeinrichtung und/oder zumindest eine entlang des Verlaufs des Lenkungsgliedes zwischen der ersten Lenkrolle und der zweiten Lenkrolle angeordnete dritte Umlenkeinrichtung und/oder zumindest eine vierte Umlenkeinrichtung, mittels der eine Spannung des Lenkungsgliedes veränderbar ist, vorzugsweise die vierte Umlenkeinrichtung in eine Richtung einer Spannkraft, die vorzugsweise senkrecht zu dem Lenkungsglied im Bereich der vierten Umlenkeinrichtung verläuft, bewegbar gelagert ist, wobei vorzugsweise eine Vielzahl von ersten Umlenkeinrichtungen, zweiten Umlenkeinrichtungen, dritten Umlenkeinrichtungen und/oder vierten Umlenkeinrichtungen vorgesehen ist, insbesondere mittels einer zweiten ersten, zweiten zweiten, zweiten dritten und/oder zweiten vierten Umlenkeinrichtung das zwischen dem ersten Lenkungselement, insbesondere der Deichsel, der ersten Lenkrolle, der zweiten Lenkrolle, einer ersten ersten Umlenkeinrichtung, ersten zweiten Umlenkeinrichtung, ersten dritten Umlenkeinrichtung und/oder ersten vierten Umlenkeinrichtung und dem zweiten Lenkungselement, insbesondere der ersten Lenkrolle, der zweiten Lenkrolle, einer dritten ersten Umlenkeinrichtung, dritten zweiten Umlenkeinrichtung, dritten dritten Umlenkeinrichtung, dritten vierten Umlenkeinrichtung und/oder der Deichsel, verlaufende Lenkungsglied zumindest bereichsweise entlang einer von einer direkten Verbindungslinie zwischen dem ersten Lenkungselement und dem zweiten Lenkungselement, abweichenden Führungsstrecke geführt wird.

Bei den beiden vorgenannten Ausführungsformen wird mit der Erfindung vorgeschlagen, dass das Lenkungsglied mittels der Umlenkeinrichtung um ein Wagenelement, insbesondere ein zumindest bereichsweise auf der ersten Seite der Tragebene und/oder des Tragrahmens und/oder in einer Verlaufsebene des Lenkungsglieds zumindest bereichsweise angeordnetes Hindernis, wie eine, vorzugsweise einziehbare und/oder ausfahrbare Stütze, ein Verstärkungselement, und/oder die Aussparung, führbar ist.

Weiterhin schlägt die Erfindung vor, dass die Lenkungsvorrichtung, insbesondere das Lenkungsglied, zumindest ein Justierelement, mittels dem die relative Drehposition der Deichsel um die Deichseldrehachse und der ersten Lenkrolle um die erste Lenkachse, der Deichsel um die Deichseldrehachse und der zweiten Lenkrolle um die zweite Lenkachse und/oder der Deichsel um die Deichseldrehachse und/oder der ersten Lenkrolle um die erste Lenkachse und der zweiten Lenkrolle um die zweite Lenkachse.

Eine Weiterentwicklung der Erfindung sieht vor, dass die Lenkungsvorrichtung zumindest ein, insbesondere von dem Lenkungsglied, insbesondere der Kette und/oder dem Riemen umfasstes Spannelement umfasst, wobei mittels des Spannelementes eine Länge eines ersten Elementes, der Lenkungsvorrichtung, vorzugsweise des Lenkungsgliedes, wie eines ersten Kettensegments und/oder eines ersten Riemensegments, zwischen der Deichsel und der ersten Lenkrolle, der Deichsel und der ersten Umlenkeinrichtung, der ersten Umlenkeinrichtung und der ersten Lenkrolle und/oder zwei ersten Umlenkeinrichtungen, eine Länge eines zweiten Elementes der Lenkungsvorrichtung, vorzugsweise des Lenkungsgliedes, wie eines zweiten Kettensegments und/oder eines zweiten Riemensegments, zwischen der Deichsel und der zweiten Lenkrolle, der Deichsel und der zweiten Umlenkeinrichtung, der zweiten Umlenkeinrichtung und der zweiten Lenkrolle und/oder zwei zweiten Umlenkeinrichtungen eine Länge eines dritten Elementes der Lenkungsvorrichtung, vorzugsweise des Lenkungsgliedes, wie eines dritten Kettensegments und/oder eines dritten Riemensegments, zwischen der ersten Lenkrolle und der zweiten Lenkrolle, der ersten Lenkrolle und der dritten Umlenkeinrichtung, der dritten Umlenkeinrichtung und der zweiten Lenkrolle und/oder zwei dritten Umlenkeinrichtungen und/oder eine Länge eines vierten Elementes, der Lenkungsvorrichtung, vorzugsweise des Lenkungsgliedes, wie eines vierten Kettensegments und/oder eines vierten Riemensegments, zwischen dem ersten Lenkungselement und dem zweiten Lenkungselement, zwischen zwei ersten Lenkungselementen, zwischen zwei zweiten Lenkungselementen, zwischen dem ersten Lenkungselement und der ersten Umlenkeinrichtung, der zweiten Umlenkeinrichtung, der dritten Umlenkeinrichtung und/oder der vierten Umlenkeinrichtung und/oder zwischen dem zweiten Lenkungselement und der ersten Umlenkeinrichtung, der zweiten Umlenkeinrichtung, der dritten Umlenkeinrichtung und/oder der vierten Umlenkeinrichtung einstellbar ist, wobei vorzugsweise ein erstes Spannelement von dem ersten Element, ein zweites Spannelement von dem zweiten Element und/oder ein drittes Spannelement von dem dritten Element umfasst und/oder ein viertes Spannelement von dem vierten Element umfasst ist bzw. sind.

Mit der Erfindung wird auch vorgeschlagen, dass das Justierelement und das Spannelement, insbesondere das erste Justierelement und das erste Spannelement, das zweite Justierelement und das zweite Spannelement, das dritte Justierelement und das dritte Spannelement und/oder das vierte Justierelement und das vierte Spannelement, zumindest bereichsweise in einem ausgebildet sind und/oder das Justierelement und/oder das Spannelement, insbesondere das erste Justierelement, das zweite Justierelement, das dritte Justierelement, das vierte Justierelement, das erste Spannelement, das zweite Spannelement, das dritte Spannelement und/oder das vierte Spannelement zumindest ein Federelement, zumindest einen Gewindespanner, zumindest einen Schaubspanner und/oder zumindest eine teleskopisch bewegbare Spannvorrichtung umfasst.

Bei den vorgenannten vier Ausführungsformen ist besonders bevorzugt, dass das Lenkungsglied, insbesondere die Kette und/oder der Riemen, in einem Kreuzungsbereich, insbesondere des zwischen der Deichselachse und der ersten Lenkachse und/oder der zweiten Lenkachse befindlichen Bereiches des Lenkungsgliedes, insbesondere des Riemens oder der Kette einerseits und des zwischen der ersten Lenkachse und der zweiten Lenkachse befindlichen Bereiches des Lenkungsgliedes, insbesondere des Riemens oder der Kette andererseits in unterschiedlichen Ebenen, insbesondere bezüglich der Tragebene, führbar ist, insbesondere in dem Kreuzungsbereich das Lenkungsglied, insbesondere die Kette und/oder der Riemen, vorzugsweise das erste Element, das zweite Element, das dritte Element, das vierte Element, das erste Kettensegment, das zweite Kettensegment, das dritte Kettensegment, das vierte Kettensegment, das erste Riemensegment, das zweite Riemensegment, das dritte Riemensegment, das vierte Riemensegment, das Spannelement und/oder das Justierelement, insbesondere das erste Justierelement, das zweite Justierelement, das dritte Justierelement, das vierte Justierelement, das erste Spannelement, das zweite Spannelement und/oder das dritte Spannelement und/oder das vierte Spannelement, insbesondere in einer Richtung senkrecht zu einer Haupterstreckungsrichtung des Lenkungsgliedes, insbesondere des Riemens und/oder der Kette, zumindest bereichsweise eine U-förmige und/oder V-förmige Querschnittsform und/oder eine Erhöhung oder eine Vertiefung aufweist, insbesondere die Haupterstreckungsrichtung des Lenkungsgliedes, vorzugsweise der Kette und/oder des Riemens parallel und bezüglich der Tragebene versetzt zu der Haupterstreckungsrichtung des Spannelementes und/oder Justierelementes verläuft.

Auch ist bevorzugt, dass die erste Rollenachse der ersten Lenkrolle im wesentlichen senkrecht zu der ersten Lenkachse verläuft, die zweite Rollenachse der zweiten Lenkrolle im wesentlichen senkrecht zu der zweiten Lenkachse verläuft und/oder eine dritte Rollenachse der dritten Lenkrolle im wesentlichen senkrecht zu der dritten Lenkachse verläuft, wobei vorzugsweise die erste Lenkachse und die erste Rollenachse und/oder die zweite Lenkachse und die zweite Rollenachse sich schneiden und/oder die dritte Rollenachse der frei drehbaren dritten Lenkrolle, windschief zu der dritten Lenkachse verläuft.

Ein erfindungsgemäßer Transportwagen kann auch dadurch gekennzeichnet sein, dass die erste Rollenachse, die zweite Rollenachse und die dritte Rollenachse, zumindest bei einer Bewegung des Transportwagens in eine zu der Hauptfahrtrichtung und/oder eine Richtung senkrecht zu der Hauptfahrtrichtung geneigt Richtung, einen gemeinsamen Schnittpunkt, insbesondere den Drehmittelpunkt des Transportwagens, aufweisen.

Auch ist bevorzugt, dass durch eine Drehung der Deichsel um die Deichseldrehachse mit einem ersten Drehsinn die erste Lenkrolle um die erste Lenkachse mit einem zweiten Drehsinn drehbar ist und die zweite Lenkrolle um die zweite Lenkachse mit einem dritten, dem zweiten Drehsinn entgegen gesetzten Drehsinn drehbar ist, wobei vorzugsweise der erste Drehsinn gleich dem zweiten Drehsinn ist, und/oder mittels der Lenkungsvorrichtung, insbesondere mittels des Umlenkgetriebes, eine Drehung der Deichsel um die Deichseldrehachse mit einem Übersetzungsverhältnis auf die erste Lenkrolle und/oder die zweite Lenkrolle übertragbar ist, vorzugsweise untersetzt, insbesondere mit einem Übersetzungsverhältnis größer 1, untersetzt, insbesondere mit einem Übersetzungsverhältnis größer 1, übersetzt, insbesondere mit einem Übersetzungsverhältnis kleiner 1, oder direkt, insbesondere mit einem Übersetzungsverhältnis von eins, vorzugsweise auf die erste Lenkachse und/oder die zweite Lenkachse übertragbar ist, wobei vorzugsweise die erste Rollenachse, insbesondere bei einer direkten Übertragung in der Tragebene senkrecht zu einer Ausrichtung der Deichsel verläuft.

Dabei kann insbesondere vorgesehen sein, dass das Übersetzungsverhältnis für die Übertragung der Drehung der Deichsel auf die erste Lenkrolle, insbesondere betragsmäßig, gleich dem Übersetzungsverhältnis für die Übertragung der Drehung der Deichsel auf die zweite Lenkrolle ist und/oder das Übersetzungsverhältnis nicht konstant über den Drehbereich der Deichsel um die Deichseldrehachse ist, insbesondere über den Drehbereich zumindest bereichsweise, vorzugsweise nicht linear, ansteigt und/oder zumindest bereichsweise, vorzugsweise nicht linear, abnimmt.

Bei den beiden vorgenannten Ausführungsformen ist insbesondere bevorzugt, dass insbesondere mittels des Umlenkgetriebes, eine Drehung der Deichsel in einem ersten Winkelbereich mit einem Übersetzungsverhältnis von kleiner als eins an die, insbesondere ein kurveninneres Rad einer Bewegung des Transportwagens darstellende, erste Lenkrolle und/oder zweite Lenkrolle übertragbar ist und in einem zweiten Winkelbereich mit einem Übersetzungsverhältnis von größer als eins an die, insbesondere ein kurvenäußeres Rad einer Bewegung des Transportwagens darstellende, erste Lenkrolle und/oder zweite Lenkrolle übertragbar ist, wobei vorzugsweise der erste Winkelbereich für die erste Lenkrolle und/oder die zweite Lenkrolle zumindest bereichsweise einem zweiten Winkelbereich für die dritte Lenkrolle, insbesondere die erste dritte Lenkrolle und/oder die zweite dritte Lenkrolle, entspricht und/oder der zweite Winkelbereich für die erste Lenkrolle und/oder die zweite Lenkrolle zumindest bereichsweise dem ersten Winkelbereich für die dritte Lenkrolle, insbesondere die erste dritte Lenkrolle und/oder die zweite dritte Lenkrolle, entspricht.

Weiterhin schlägt die Erfindung in der vorgenannten Ausführungsform einen Transportwagen vor, der gekennzeichnet ist dadurch, dass der erste Winkelbereich für die erste Lenkrolle und die zweite Lenkrolle und der zweite Winkelbereich für die dritte Lenkrolle, insbesondere die erste dritte Lenkrolle und die zweite dritte Lenkrolle, zwischen 0° und 45° und/oder -45° und -90° bezogen auf die Position der Deichsel relativ zu einer der Hauptfahrtrichtung (B) entsprechenden Position liegt und/oder der zweite Winkelbereich für die erste Lenkrolle und die zweite Lenkrolle und der erste Winkelbereich für die dritte Lenkrolle, insbesondere die erste dritte Lenkrolle und die zweite dritte Lenkrolle, zwischen 45° und 90° und/oder 0° und -45° bezogen auf die Position der Deichsel relativ zu der der Hauptfahrtrichtung (B) entsprechenden Position liegt, vorzugsweise diesen Bereich komplett abdeckt.

Weiterhin kann ein erfindungsgemäße Transportwagen dadurch gekennzeichnet sein, dass das Umlenkgetriebe zumindest eine exzentrisch gelagerte und/oder eine von einer rotationssymmetrischen Form abweichende, insbesondere elliptische, quadratische und/oder mehreckige Umfangsform aufweisende fünfte Umlenkeinrichtung umfasst, insbesondere eine erste fünfte Umlenkeinrichtung mit der ersten Lenkrolle in Wirkverbindung steht, eine zweite fünfte Umlenkeinrichtung mit der ersten Lenkrolle in Wirkverbindung steht, wobei vorzugsweise an zumindest zwei unterschiedliche fünfte Umlenkeinrichtungen eine Bewegung der Deichsel mittels unterschiedlicher Lenkungsgliedteile übertragbar ist.

Bei der vorgenannten Ausführungsform ist insbesondere bevorzugt, dass insbesondere direkt oder mittels zumindest eines Rollenlenkungsgliedes, vorzugsweise umfassend zumindest eine Kette, zumindest einen Riemen, zumindest ein Seil, zumindest einen Draht, zumindest ein Stahlseil, zumindest ein Zahnradgetriebe, zumindest eine Übertragungswelle und/oder zumindest ein Gestänge, wobei vorzugsweise die Bewegung der siebten Umlenkeinrichtung mittels zumindest eines Getriebe-Verbindungselements von der siebten Umlenkeinrichtung auf das Rollenlenkungsglied übertragbar ist, vorzugsweise die siebte Umlenkeinrichtung und das Getriebe-Verbindungselement drehmitnahmesicher verbunden sind und/oder eine gemeinsame Rotationsachse aufweisen, wobei insbesondere das Getriebe-Verbindungselement konzentrisch zu der Rotationsachse gelagert ist.

In einer bevorzugten Ergänzung der zwei vorgenannten Ausführungsformen kann vorgesehen sein, dass zumindest eine siebte Umlenkeinrichtung mit zumindest zwei Lenkrollen in Wirkverbindung steht, insbesondere eine Bewegung der siebten Umlenkeinrichtung, vorzugsweise mittels des Rollenlenkungsglieds, an Verbindungselemente zweier unterschiedlicher Lenkrollen übertragbar ist.

Auch wird mit der Erfindung vorgeschlagen, dass die Übersetzungsverhältnisse im ersten Winkelbereich und im zweiten Winkelbereich so wählbar sind, dass bei einer Drehung der Deichsel um die Deichseldrehachse aus der Hauptfahrtrichtung (B) um 90° die erste Lenkrolle, die zweite Lenkrolle und die dritte Lenkrolle, insbesondere die erste dritte Lenkrolle und die zweite dritte Lenkrolle, ebenfalls um 90° um die erste Lenkachse, die zweite Lenkachse und die dritte Lenkachse drehbar sind und/oder eine Bewegung des Deichsel-Verbindungselementes mit einem Übersetzungsverhältnis von x/1 auf die siebte Umlenkeinrichtung übertragbar ist und/oder eine Bewegung der siebten Umlenkeinrichtung mit einem Übersetzungsverhältnis von 1/x auf das Verbindungselement und/oder das Rollenlenkungsglied übertragbar ist, wobei x vorzugsweise 4 beträgt.

Die Erfindung schlägt auch vor, dass die erste Lenkrolle eine, insbesondere die erste Lenkachse festlegende, erste Verbindungseinrichtung, die zweite Lenkrolle eine, insbesondere die zweite Lenkachse festlegende zweite Verbindungseinrichtung und/oder die dritte Lenkrolle eine, insbesondere die dritte Lenkachse festlegende, dritte Verbindungseinrichtung umfasst bzw. umfassen, wobei insbesondere die erste Verbindungseinrichtung, die zweite Verbindungseinrichtung und/oder die dritte Verbindungseinrichtung ortsfest relativ zu dem Tragrahmen angeordnet ist bzw. sind, und/oder die erste Verbindungseinrichtung, die zweite Verbindungseinrichtung, die dritte Verbindungseinrichtung, die erste Lenkachse, die zweite Lenkachse und/oder die dritte Lenkachse in eine Richtung senkrecht zu der Schwerpunktachse und parallel zu der Tragebene einen größtmöglichen, insbesondere durch die Außenkanten des Tragrahmens festgelegten Abstand zu der Schwerpunktachse aufweist bzw. aufweisen.

Dabei ist besonders bevorzugt, dass die erste Verbindungseinrichtung, die zweite Verbindungseinrichtung und/oder die dritte Verbindungseinrichtung zumindest eine Anschraubplatte, zumindest einen Einsteckzapfen und/oder zumindest ein Rückenloch umfasst.

Weiterhin wird vorgeschlagen, dass die dritte Lenkachse im wesentlichen senkrecht zu der Tragebene verläuft.

Auch ist bevorzugt, dass ein Transportwagen dadurch gekennzeichnet ist, dass zumindest zwei dritte Lenkrollen über zumindest eine Wippe mit dem Tragrahmen verbunden sind, vorzugsweise die Wippe um zumindest eine senkrecht zu der Schwerpunktsachse, senkrecht zu der dritten Lenkachse und/oder parallel zu der Tragebene verlaufende Wippachse drehbar ist.

Bei dieser Ausführungsform ist besonders bevorzugt, dass die Drehung der Wippe um die Wippachse, insbesondere mittels zumindest einer Begrenzungseinrichtung, begrenzbar ist, wobei vorzugsweise die Begrenzungseinrichtung zumindest einen Anschlag und/oder ein Element des Tragrahmens umfasst.

Eine Weiterentwicklung der Erfindung sieht vor, dass die Deichseldrehachse und die Schwerpunktachse einen gemeinsamen Schnittpunkt aufweisen und/oder die Deichsel zusätzlich um eine zu der Deichseldrehachse im wesentlichen senkrechte Kippachse verkippbar ist, vorzugsweise mittels eines Rückstellelementes, wie einem Federelement, in eine Position im wesentlichen senkrecht zu der Tragebene vorgespannt ist.

Schließlich wird für den erfindungsgemäßen Transportwagen vorgeschlagen, dass der Transportwagen als Hubwagen, Anhänger, Trailer und/oder Schubwagen ausgebildet ist.

Weiterhin liefert die Erfindung einen Zug umfassend eine Vielzahl von, insbesondere mittels der jeweiligen Deichsel eines nachfolgenden Transportwagens, miteinander verbundene erfindungsgemäße Transportwagen.

Weiterhin liefert die Erfindung ein Zubehörkit für einen Transportwagen, insbesondere einen erfindungsgemäßen Transportwagen, umfassend zumindest eine erste Lenkrolle, zumindest eine zweite Lenkrolle, zumindest eine dritte Lenkrolle, zumindest eine Lenkungsvorrichtung, zumindest eine Deichsel, zumindest eine Fixiereinrichtung, zumindest ein Lenkungsglied, zumindest ein Deichsel-Verbindungselement, zumindest ein Verbindungselement, zumindest ein Umlenkrad, zumindest ein Justierelement, zumindest ein Spannelement, zumindest ein Umlenkgetriebe, zumindest eine siebte Umlenkeinrichtung, zumindest ein Rollenlenkungsglied, zumindest ein Getriebe-Verbindungselement und/oder zumindest eine Wippe.

Der Erfindung liegt somit die überraschende Erkenntnis zugrunde, dass ein sehr gut manövrierbarer, insbesondere präzise steuerbarer und einen kleinen Wendekreis aufweisender Transportwagen, der darüber hinaus konstruktiv einfach aufgebaut und damit kostengünstig herstellbar und eine geringe Fehleranfälligkeit aufweisend ausgestaltet werden kann und auch eine hohe Kippsicherheit bei Bewegung in die unterschiedlichen Richtungen aufweist, dadurch bereitgestellt werden kann, dass der Transportwagen insgesamt mindestens drei Lenkrollen aufweist, von denen zumindest zwei zwangsgelenkt sind, wobei darüber hinaus die beiden zwangsgelenkten Lenkrollen bezüglich einer Hauptfahrtrichtung des Transportwagens, welcher einer neutralen Stellung der Deichsel entspricht, auf einer Seite des Transportwagens links bzw. rechts angeordnet sind, während zumindest eine dritte Lenkrolle auf der gegenüberliegenden Seite des Transportwagens angeordnet ist. In einer ersten Alternative ist die dritte Lenkrolle im wesentlichen frei lenkbar, während in einer zweiten Alternative die dritte Lenkrolle ebenfalls zwangsgelenkt ist. Erfindungsgemäß werden in der ersten Alternative dabei bevorzugt genau zwei zwangsgelenkte Lenkrollen und genau eine oder zwei frei drehbare dritte Lenkrollen verwendet, um eine statische Überbestimmung zu vermeiden und Lenkkräfte zu minimieren. In der zweiten Alternative werden bevorzugt genau zwei dritte zwangsgelenkte Lenkrollen zur Erreichung dieses Ziels verwendet. Grundsätzlich wird also in der ersten Alternative ein Transportwagen bevorzugt, bei dem zwei zwangsgelenkte Lenkrollen, die einseitig angeordnet sind, und ein oder zwei frei drehbare Lenkrollen auf der anderen Seite angeordnet sind. Es können aber auch mehr zwangsgelenkte (jeweils mehrere erste und/oder mehrere zweite) Lenkrollen und mehrere dritte, frei drehbare Lenkrollen mit entsprechenden jeweiligen Lenkachsen, vorgesehen sein. In der zweiten Alternative können neben der bevorzugten Ausführungsform von zwei zwangsgelenkten Lenkrollen auf der einen Seite und zwei zwangsgelenkten Lenkrollen, also eine Vielzahl erste, zweite und/oder dritte Lenkrollen, mit jeweiligen Lenkachsen vorhanden sein.

Bei der zweiten Alternative erfolgt die Zwangslenkung der Lenkrollen derartig, dass eine Bewegung der Deichsel um die Deichseldrehachse, insbesondere über ein entsprechendes Umlenkgetriebe, ungleichmäßig auf die zwangsgelenkten Lenkrollen übertragen wird, insbesondere unterschiedliche Lenkeinschläge für die kurveninneren und die kurvenäußeren Lenkrollen erreicht werden. Hierbei werden ferner sowohl die kurveninneren Lenkrollen relativ zueinander mit gegensinnigem Drehsinn, allerdings vorzugsweise mit betragsmäßig gleichem Drehwinkel, als auch die kurvenäußeren Lenkrollen relativ zueinander mit gegensinnigem Drehsinn, allerdings vorzugsweise mit betragsmäßig gleichem Drehwinkel, gedreht.

Sowohl durch die frei drehbare Ausgestaltung der dritten Lenkrolle in der ersten Alternative als auch die besondere Ansteuerung der dritten zwangsgelenkten Lenkrolle(n) in der zweiten Alternative wird erreicht, dass bei einer Kurvenfahrt des Transportwagens die jeweils kurveninneren Lenkrollen zumindest für einen ersten Bewebungsbereichs der Deichsel stärker um die jeweilige Lenkachse gedreht werden als die kurvenäußeren Lenkrollen. Dadurch wird ermöglicht, dass die Lenkrollen jeweils tangential zu dem jeweiligen Kurvenradius ausgerichtet werden. Dadurch wird ein "Schieben" oder "Radieren" der Lenkrollen vermieden, zumindest verringert und so ein Verschleiß und Lenkkräfte minimiert. Ferner wird durch die Einlenkung aller Lenkrollen das Durchfahren kleiner Kurvenradien ermöglicht, so dass der Transportwagen auf sehr kleinen Flächen rangiert werden kann.

Die Übertragung der Drehbewegung der Deichsel auf die zwangsgelenkten Lenkrollen der zweiten Alternative erfolgt also derartig, dass in einem ersten Bewegungsbereich der Deichsel die kurveninneren Lenkrollen mittels einem ersten Übersetzungsverhältnis, insbesondere übersetzt, um die Lenkachsen gedreht werden, während die kurvenäußeren Lenkrollen mittels einem im Vergleich zu dem ersten Übersetzungsverhältnis größeren Übersetzungsverhältnis, insbesondere untersetzt, um die Lenkachsen gedreht werden. Mit anderen Worten führt eine Bewegung der Deichsel in dem ersten Bewegungsbereich zu einer stärkeren Drehung der kurveninneren Lenkrollen um die Lenkachse im Vergleich zu den kurvenäußeren Lenkrollen.

Im Sinne der vorliegenden Erfindung wird unter einem Übersetzungsverhältnis der Quotient aus der Drehzahl der Antriebs geteilt durch die Drehzahl des Abtriebs verstanden, also i-n_{Antrieb}/n_{Abtrieb}.

Um jedoch weiterhin eine Querbewegung des Transportwagens zu ermöglichen, ist in der zweiten Alternative vorgesehen, dass in einem zweiten Bewegungsbereich der Deichsel die kurveninneren Lenkrollen mit einem zweiten Übersetzungsverhältnis, das größer als das erste Übersetzungsverhältnis ist, um die Lenkachse gedreht werden und die kurvenäußeren Lenkrollen mit einem Übersetzungsverhältnis, das geringer als das zweite Übersetzungsverhältnis ist, um die jeweilige Lenkachse gedreht werden. Mit anderen Worten führt also eine Bewegung der Deichsel in dem zweiten Bewegungsbereich zu einer stärkeren Drehung der kurvenäußeren Lenkrollen um die jeweilige Drehachse im Vergleich zu der Drehung der kurveninneren Lenkrollen um die jeweilige Lenkachse. Dies ermöglicht es, dass die kurvenäußeren Lenkrollen die kurveninneren Lenkrollen bezüglich der Drehung um die jeweilige Lenkachse wieder "einholen" können, eine Differenz der Drehstellungen zumindest reduziert wird. Bevorzugt ist dieses "Einholen" bei einer Drehung der Deichsel bzw. der Lenkrollen um 90° erreicht, so dass die Drehstellungen übereinstimmen. Dadurch wird eine Bewegung der Deichsel um 90°, insbesondere unter gleichzeitiger Ausrichtung aller Lenkrollen 90° relativ zu der Hauptfahrtrichtung des Transportwagens, möglich, so dass der Transportwagen in Querrichtung bewegt werden kann. Eine derartige Querbewegung ist bei Lenkungen bei denen die Rollen mit einem gleichbleibenden Übersetzungsverhältnis angetrieben werden, nicht möglich.

Diese Einstellung der unterschiedlichen Übersetzungsverhältnisse kann insbesondere dadurch erzielt werden, dass eine Bewegung der Deichsel, insbesondere mittels eines Lenkungsgliedes, wie einer Kette, über exzentrisch gelagerte und/oder eine von einer rotationssymmetrischen Umfangsform abweichende Umfangsform aufweisende Umlenkeinrichtungen, wie exzentrischen Kettenrädern, an die Lenkrollen übertragen wird.

Erfindungsgemäß wurde festgestellt, dass im Vergleich zur Verwendung zweier, insbesondere gleichmäßig, zwangsgelenkter Vorderrollen des Transportwagens in Kombination mit zwei Hinterrollen in Form von Bockrollen am hinteren Ende des Transportwagens ein kleinerer Wendekreis erzielbar ist und darüber hinaus im Vergleich zur Anordnung zweier Lenkrollen im vorderen Bereich des Transportwagens und einer oder zwei Lenkrollen im hinteren Bereich des Transportwagens eine bessere Kontrolle der Bewegung bzw. präzisere Steuerung des Transportwagens möglich ist, insbesondere ein Ausscheren des hinteren Teils des Transportwagens vermieden wird.

Dieser erfindungsgemäße Aufbau des Transportwagens bietet insbesondere den Vorteil, dass der Wagen statisch stabil ist, insbesondere in dem Fall, in dem eine Vielzahl, insbesondere zwei, über eine Wippe miteinander verbundene dritte Lenkrolle eingesetzt werden.

Aufgrund der einseitigen Zwangslenkung der Lenkrollen in der ersten Alternative ist es darüber hinaus möglich, alle drei Lenkrollen über eine entsprechende Verbindungsvorrichtung direkt mit dem Tragrahmen zu verbinden. Auch ist in der ersten Alternative lediglich die Bewegung von zwei Lenkrollen für eine Lenkbewegung notwendig, so dass sich geringe Lenkkräfte ergeben. Darüber hinaus sind die Lenkrollen, insbesondere in beiden Alternativen, bevorzugt soweit wie möglich von der Schwerpunktachse des Transportwagens beabstandet angeordnet, also am Außenrand bzw. in den Ecken des Transportrahmens, so dass sich eine größtmögliche Stabilität ergibt, auch wenn die Lenkrollen für eine Querbewegung ausgerichtet werden. Da auf einen Drehschemel, der einstückig mit der Drehachse ausgebildet ist, verzichtet werden kann und die Deichseldrehachse unabhängig von der Drehachse der zwangsgelenkten Lenkrollen ausgebildet werden kann, ist eine derartige Konstruktion der Deichsel möglich, dass diese in jeder beliebigen Position derartig hochgeklappt werden kann, dass sie nicht mehr über die Außenkontur des Transportwagens, insbesondere den Tragrahmen, hinausragt. Schließlich ermöglicht es der stets sichergestellte Kontakt der Rollen des Transportwagens mit einer Oberfläche, dass stets jede Lenkrolle einen ausreichend guten Bodenkontakt besitzt, insbesondere bei Verwendung mehrerer dritter Lenkrollen, die über eine Wippe mit dem Tragrahmen verbunden sind.

Darüber hinaus ermöglicht es die konstruktive Ausgestaltung des erfindungsgemäßen Transportwagens, dass, ohne Einbußen hinsichtlich der Stabilität und Manövrierfähigkeit hinnehmen zu müssen, beliebige Grundflächenformen des Tragrahmens bzw. der Tragebene realisiert werden können. So kann die Tragebene Aussparungen umfassen, in die eine Person zum Be- und Entladen des Transportwagens hineintreten kann, um so stets eine ergonomisch vorteilhafte Position der Be- und Entladeperson zu ermöglichen und gleichzeitig eine Erreichbarkeit der gesamten beladenen Fläche der Tragebene ermöglicht wird. So kann die Tragebene U-förmig, V-förmig, W-förmig, H-förmig oder auch F-förmig ausgebildet sein. So wird eine Begehbarkeit des Transportwagens von hinten und/oder von der Seite ermöglicht. Insbesondere wird dies dadurch erreicht, dass eine Führung eines Lenkungsgliedes, insbesondere eine Kettenführung, so varüert werden kann, dass am Transportwagen Aussparungen, die das Be- und Entladen vereinfachen, seitlich und/oder von hinten möglich sind. Insbesondere wird eine Linie des Lenkungsgliedes, insbesondere eine Kettenlinie, über zusätzliche Umlenkelemente um die Aussparungen herum geführt. Dazu ist also vorgesehen, dass das Lenkungsglied, wie eine Kette oder ein Riemen, über jeweilige Umlenkeinrichtungen so geführt wird, dass das Lenkungsglied stets durch die Tragebene bzw. den Tragrahmen abgedeckt wird, also stets unterhalb derselben verläuft, um so einen freien Zugang in die Ausnehmung zu ermöglichen. Auch ermöglicht es diese Führung des Lenkungsglieds, dass das Lenkungsglied um nach unten hervorstehende Hindernisse, wie ein- bzw. ausfahrbare Stützen und/oder Verstärkungselemente des Tragrahmens herumgeführt werden kann.

Weitere Merkmale und Vorteile der Erfindung ergeben sich aus der nachfolgenden Beschreibung, in der bevorzugte Ausführungsformen der Erfindung anhand von schematischen Zeichnungen erläutert werden. Dabei zeigt:
- Figur 1: eine Aufsicht auf eine Unterseite eines aus dem Stand der Technik bekannten Transportwagens;
- Figur 2: eine perspektivische, schematische Aufsicht auf einen erfindungsgemäßen Transportwagen;
- Figur 3: eine perspektivische Aufsicht auf eine erste oder zweite Lenkrolle;
- Figur 4: eine perspektivische Aufsicht auf eine dritte Lenkrolle;
- Figur 5: eine perspektivische Aufsicht auf den Transportwagen gemäß Figur 2 gemäß einer ersten alternativen Ausführungsform mit einer einzelnen dritten Lenkrolle;
- Figur 6: eine perspektivische Aufsicht auf eine in einem erfindungsgemäßen Transportwagen einsetzbare Wippe;
- Figur 7: eine perspektivische Aufsicht auf den Transportwagen gemäß der Figur 2 gemäß einer zweiten alternativen Ausführungsform mit einer Wippe gemäß Figur 6;
- Figur 8a: eine schematische Unterseitenansicht des Transportwagens der Figur 7 bei einer Geradeausfahrt;
- Figur 8b: eine schematische Seitenansicht des Transportwagens der Figur 8a;
- Figur 8c: eine weitere Seitenansicht des Transportwagens der Figur 8a;
- Figur 9a: eine schematische Unterseitenansicht des Transportwagens der Figur 7 bei einer ersten Lenkposition der Deichsel im Stand des Transportwagens;
- Figur 9b: eine schematische Unterseitenansicht des Transportwagens der Figur 9a bei einer Fahrtbewegung;
- Figur 10: eine schematische Unterseitenansicht des Transportwagens der Figur 7 bei einer zweiten Lenkposition der Deichsel;
- Figur 11a: eine perspektivische Seitenansicht des Transportwagens der Figur 7 bei einer Lenkposition der Deichsel für eine Querfahrt;
- Figur 11b: eine schematische Unterseitenansicht des Transportwagens der Figur 11a im Stand;
- Figur 11c: eine schematische Unteransicht des Transportwagens der Figuren 11a und 11b in einer Querbewegung;
- Figur 11d: eine perspektivische Aufsicht auf den Transportwagen der Figur 11a aus Richtung A in Figur 11a;
- Figur 11e: eine Detailansicht einer Fixiereinrichtung für die Deichseldrehachse des Transportwagens der Figur 11a;
- Figur 12: eine Detailansicht einer Justier- bzw. Spanneinrichtung, die mit der Kette der Kettenlenkung verbunden ist;
- Figur 13: eine schematische Unterseitenansicht einer alternativen dritten Ausführungsform eines erfindungsgemäßen Transportwagens;
- Figur 14: eine schematische Unterseitenansicht einer alternativen vierten Ausführungsform eines erfindungsgemäßen Transportwagens;
- Figur 15: eine schematische Unterseitenansicht einer alternativen fünften Ausführungsform eines erfindungsgemäßen Transportwagens;
- Figur 16: eine perspektivische schematische Teilaufsicht auf den Transportwagen der Figur 13;
- Figur 17: eine perspektivische schematische Teilaufsicht auf den Transportwagen der Figur 14.
- Figur 18: eine perspektivische Aufsicht auf einen Transportwagen gemäß einer weiteren Ausführungsform;
- Figur 19: eine perspektivische Aufsicht auf die Lenkrollen sowie die Lenkungsvorrichtung des Transportwagens der Figur 18;
- Figur 20: eine Detailansicht auf die im Bereich der Deichsel angeordneten Lenkrollen des Transportwagens der Figur 18;
- Figur 21a: eine perspektivische Aufsicht auf den Transportwagen der Figur 18 bei einem Deichseleinschlagwinkel von 45°;
- Figur 21b: eine Aufsicht auf den Transportwagen in der Position der Figur 21a;
- Figur 21c: eine Aufsicht auf den Ausschnitt gemäß der Figur 20, in der in den Figuren 21a und 21b dargestellten Position;
- Figur 22a: eine perspektivische Aufsicht auf den Transportwagen gemäß der Figur 18 in einer Position der Deichsel nach einer Drehung von 90°;
- Figur 22b: eine Teilansicht gemäß der Figur 20 auf den Transportwagen in der in Figur 22a dargestellten Position; und
- Figur 23: eine Detailansicht auf ein Umlenkgetriebe der Lenkungseinrichtung des Transportwagens der Figur 18 im Bereich einer Lenkrolle.

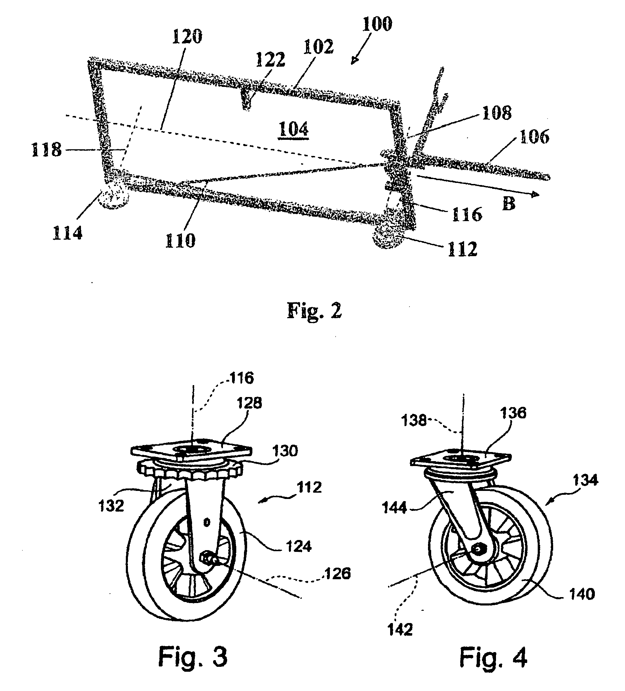

In den Figuren 2 bis 17 sind unterschiedliche Ausführungsformen von Transportwagen dargestellt und im Nachfolgenden beschrieben, bei denen gemäß der eingangs beschriebenen ersten Alternative einseitig zwei zwangsgelenkte Lenkrollen vorgesehen sind, während auf der gegenüberliegenden Seite des Transportwagens eine oder mehrere frei drehbare Lenkrollen vorgesehen sind.

Figur 2 zeigt eine schematische perspektivische Aufsicht auf einen Transportwagen 100 gemäß der Erfindung. Der Transportwagen 100 umfasst einen Tragrahmen 102 mittels dem eine Tragebene 104 aufgespannt wird. An dem Tragrahmen 102 ist eine Deichsel 106 um eine Deichseldrehachse 108 drehbar gelagert. Die Deichsel 106 ist über eine Lenkungsvorrichtung, die eine Kettenlenkung mit einem Lenkungsglied in Form einer Kette 110 umfasst, verbunden. Mittels der Kette 110 ist eine Drehbewegung der Deichsel 106 um die Deichseldrehachse 108 auf eine erste Lenkrolle 112 sowie eine zweite Lenkrolle 114 übertragbar. Aufgrund der Verbindung der Lenkrollen 112, 114 und der Deichsel 106 sind die Drehrollen 112, 114 nicht frei verdrehbar, sondern über die Position der Deichsel 106 bezüglich der Deichseldrehachse zwangsgelenkt. Dabei erfolgt eine Drehung der ersten Lenkrolle 112 um eine erste Lenkachse 116, während eine Drehung der zweiten Lenkrolle 114 um eine zweite Lenkachse 118 erfolgt.

Wie der Figur 2 weiterhin zu entnehmen ist, sind die beiden Lenkrollen 112, 114 bezüglich einer Hauptfahrtrichtung B im wesentlichen hintereinander angeordnet und darüber hinaus in Bezug auf eine Schwerpunktachse 120, die durch einen Schwerpunkt des Transportwagens 100 verläuft und in Richtung der Hauptfahrtrichtung B ausgerichtet ist, in Richtung der Tragebene 104 bezüglich der Hauptfahrtrichtung B auf der linken Seite des Transportwagens 100 angeordnet.

Der Tragrahmen 102 umfasst ferner einen Vorsprung 122, mittels dem zumindest eine dritte, jedoch frei drehbare Lenkrolle, die später erläutert werden wird, an dem Tragrahmen 102 befestigt werden kann. Erfindungsgemäß ist dabei die dritte Lenkrolle auf der den Lenkrollen 112, 114 gegenüberliegenden Seite des Transportwagens 100 relativ zu der Schwerpunktachse 120 angeordnet. Mit anderen Worten sind die beiden zwangsgelenkten Lenkrollen 112, 114 einseitig parallel in Bezug auf die Hauptfahrtrichtung B bzw. Schwerpunktachse 120 angeordnet.

In Figur 3 ist eine perspektivische Aufsicht auf die erste Lenkrolle 112 dargestellt. Es ist zunächst festzuhalten, dass unter einer Lenkrolle im Sinne der vorliegenden Erfindung auch Lenkräder zu verstehen sind, das heißt Rollen mit Rollelementen, die mehrere Komponenten umfassen, insbesondere eine von einem Rolleninneren unterschiedliche Auflagefläche aufweisen. Die Lenkrolle 112 umfasst ein Rollelement 124, welches in Form eines Reifens ausgebildet ist, und um eine erste Rollenachse 126 drehbar gelagert ist. Darüber hinaus ist das Rollelement 124 um die erste Lenkachse 116, die über eine Verbindungsvorrichtung in Form einer Anschraubplatte 128 festgelegt ist, drehbar. Hierbei erfolgt eine Zwangsdrehung des Rollelements 124 um die Lenkachse 116 über ein erstes Verbindungselement in Form eines Zahnrades 130, in welchem die Kette 110 geführt wird. Dabei ist das Zahnradelement 130 insbesondere im Bereich einer Lenkgabel 132 angeordnet.

Wie der Figur 3 insbesondere zu entnehmen ist, weist die Lenkrolle 112 keine Ausladung auf, dies bedeutet, dass die Lenkachse 116 und die Rollenachse 126 einen gemeinsamen Schnittpunkt aufweisen. Die Ausführung der Lenkrollen 112, 114 mit einer geringen oder keiner Ausladung führt insbesondere aufgrund der Kopplung über die Kette 110 zu einer Reduzierung der Lenkkräfte, d.h. der Kräfte, die zur Bewegung der Deichsel 106 um die Deichseldrehachse 108 notwendig sind.

In Figur 4 ist eine perspektivische Aufsicht auf eine Lenkrolle 134, die als dritte Lenkrolle einsetzbar ist, dargestellt. Die Lenkrolle 134 weist ebenfalls eine Anschraubplatte 136 auf, die als Verbindungsvorrichtung zur Befestigung der Lenkrolle 134 an dem Tragrahmen des Transportwagens dient. Durch die Anschraubplatte 136 wird ferner eine dritte Lenkachse 138, um die die Lenkrolle 134 frei drehbar ist, festgelegt.

Wie Figur 4 ferner zu entnehmen ist, ist ein Rollelement 140 der Lenkrolle 134 um eine dritte Rollenachse 142 drehbar gelagert. Im Gegensatz zu der Lenkrolle 112 weist die Lenkrolle 134 jedoch eine Ausladung auf, d.h. die Lenkachse 138 und die Rollenachse 142 verlaufen zwar parallel zueinander, jedoch weist eine Lenkgabel 144 eine derartige Neigung relativ zu der Lenkachse 138 auf, dass es keinen gemeinsamen Schnittpunkt zwischen der Rollenachse 142 und der Lenkachse 138 gibt.

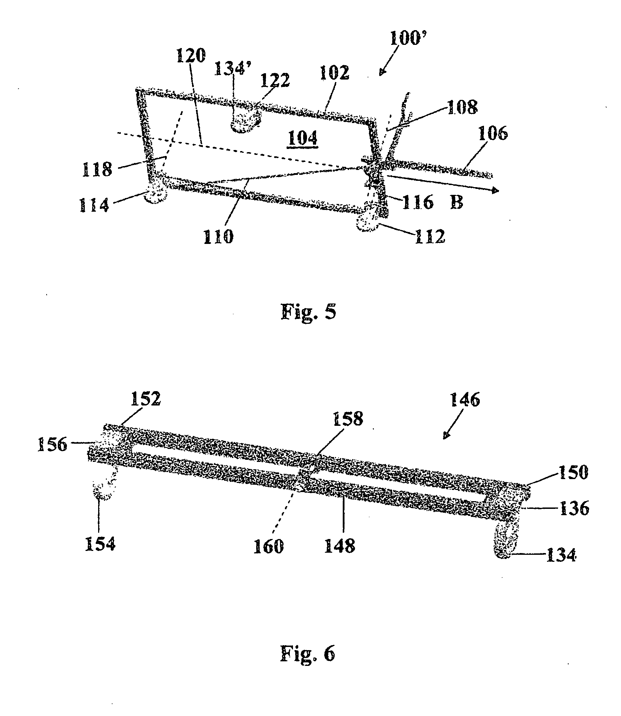

In Figur 5 ist eine erste alternative Ausführungsform des Transportwagens 100 in Form des Transportwagens 100' dargestellt. Wie der Figur 5 zu entnehmen ist, weist der Transportwagen 100' in dieser ersten alternativen Ausführungsform drei Lenkrollen, namentlich die zwangsgelenkten Lenkrollen 112, 114 sowie die mit dem Vorsprung 122 über die Verbindungsvorrichtung in Form der Anschraubplatte 136 verbundene Lenkrolle 134', auf. Durch die Verwendung von genau drei Lenkrollen ist eine Dreipunktlagerung des Tragerahmens 102 erreicht, so dass alle Unebenheiten derartig ausgeglichen werden, dass die Lenkrollen 112, 114 und 134 den Bodenkontakt nicht verlieren. Insbesondere wird so sichergestellt, dass die durch die Kette 110 zwangsgelenkten Lenkrollen 112, 114 bei einer Bewegung der Deichsel 106 ihre Bodenhaftung nicht verlieren, so dass eine sichere Seitenführung auch bei Kurvenfahrten ermöglicht wird.

In einer weiteren, zweiten alternativen Ausführungsform des Transportwagens 100 kann vorgesehen sein, dass eine Mehrzahl von dritten Lenkrollen, insbesondere genau zwei dritte Lenkrollen vorgesehen sind. Dabei ist vorgesehen, dass die weiterhin frei drehbaren dritten Lenkrollen über eine Wippkonstruktion an dem Rahmen befestigt werden. Eine entsprechende Wippe 146 ist in Figur 6 dargestellt. Die Wippe 146 weist einen Träger 148 auf, an dessen gegenüberliegenden Enden 150, 152 eine erste dritte Lenkrolle 134 sowie eine zweite dritte Lenkrolle 154, die analog zu der Lenkrolle 134 aufgebaut ist, mittels entsprechender Anschraubplatten 136, 156 befestigt sind. Relativ zu den Enden 150, 152 im wesentlichen mittig ist an dem Träger 148 eine Befestigungseinrichtung 158 ausgebildet. Durch die Befestigungseinrichtung 158 wird eine Wippachse 160 festgelegt.

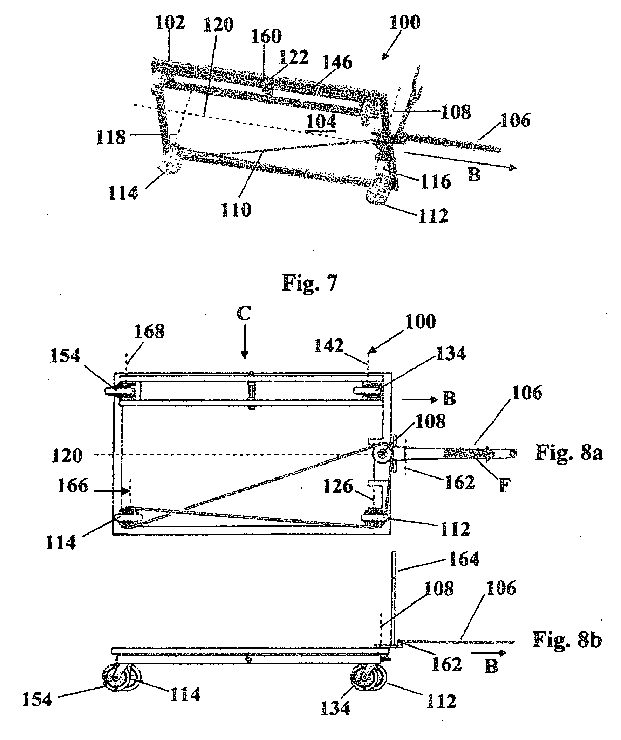

Wie der Figur 7 zu entnehmen ist, kann in der zweiten alternativen Ausführungsform des Transportwagens 100 die Wippe 146 mit dem Vorsprung 122 über die Befestigungseinrichtung 158 verbunden werden. Wie in Figur 7 weiterhin zu sehen ist, verläuft dabei die Wippachse 160 senkrecht zu der Schwerpunktachse 120 als auch senkrecht zu der ersten Lenkachse 116 und der zweiten Lenkachse 118. Dadurch wird sichergestellt, dass, unabhängig von einer Bodenbeschaffenheit, eine quasi Dreipunktauflage derart realisiert wird, dass um eine Richtungssicherheit, insbesondere bei Kurvenfahrten des Transportwagens 100, herzustellen, keine der beiden zwangsgelenkten Lenkrollen 112, 114 den Bodenkontakt verliert. Hierbei ist jedoch vorgesehen, dass die Wippe nur einen begrenzten Ausgleichsweg durch die Rotation der Wippachse 160 bereitstellt, um andererseits die Kippsicherheit auch bei Unebenheiten zu erhöhen. Die Begrenzung kann beispielsweise dadurch bereitgestellt werden, dass eines der Enden 150, 152 der Wippe 146 an den Tragrahmen 102 anschlägt.

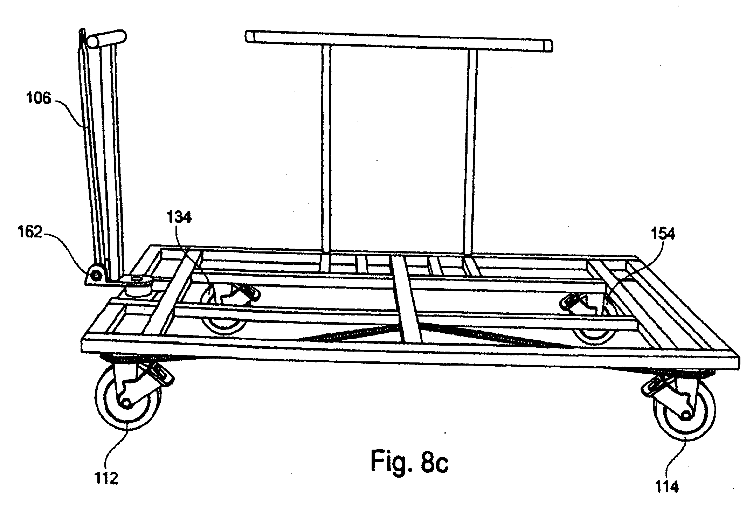

In Figur 8a ist eine schematische Unterseitenansicht des Transportwagens 100 gemäß der in Figur 7 dargestellten zweiten Ausführungsform dargestellt. In Figur 8b ist der Transportwagen 100 gemäß der Konfiguration der Figur 8a in einer Seitenansicht aus Richtung C in Figur 8a und in Figur 8c ist eine perspektivische Aufsicht auf den Transportwagen 100 dargestellt. Wie insbesondere der Figur 8a zu entnehmen ist, ist die Deichsel 106 nicht nur um die Deichseldrehachse 108 drehbar gelagert, sondern ebenfalls um eine Deichselkippachse 162, die im wesentlichen senkrecht zu der Deichseldrehachse 108 verläuft. Dies ermöglicht es, dass die Deichsel 106 in Figur 8b in Richtung in Richtung eines Handgriffes 164 hochgeklappt werden kann, wodurch insbesondere erreicht wird, dass ein Überstand der Deichsel 106 über die Außenkontur des Transportwagens 100, insbesondere den Tragrahmen 102, hinaus vermieden wird.

In Figuren 8a bis 8c ist der Transportwagen 100 in einer Geradeausfahrsituation dargestellt. Auf die Deichsel 106 wirkt eine Kraft entlang des Kraftzugvektors F, die parallel zu der Hauptfahrtrichtung B verläuft. Aufgrund der Position der Deichsel 106 sind die Rollenachse 126 der Lenkrolle 112, als auch eine Rollenachse 166 der Lenkrolle 114 senkrecht zu der Schwerpunktachse 120 ausgerichtet. Aufgrund der freien Lenkbarkeit der Lenkrollen 134 und 154 richten sich die Rollenachsen 142 der Lenkrolle 134 als auch eine Rollenachse 168 der Lenkrolle 154 ebenfalls derartig aus, dass die Rollenachsen 142 und 168 ebenfalls senkrecht zu der Schwerpunktachse 120 verlaufen.

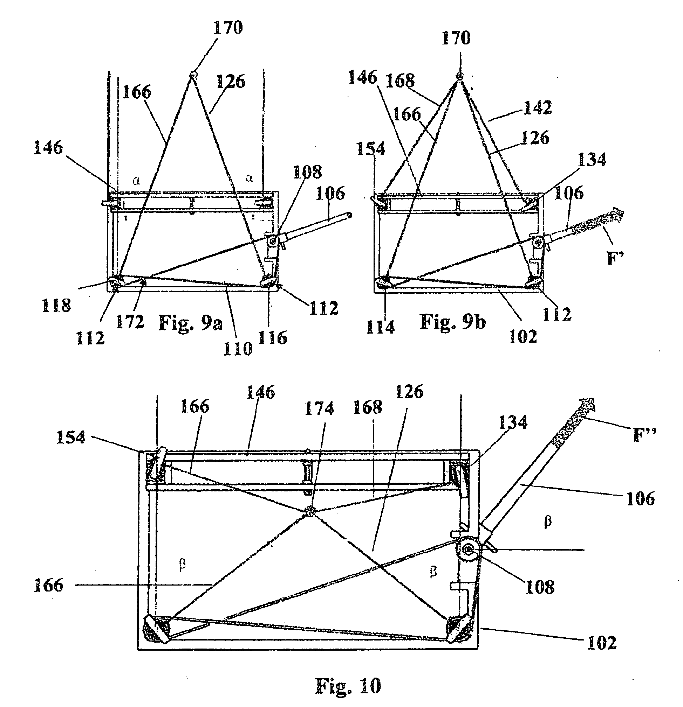

In den Figuren 9a und 9b ist der Transportwagen 100 der Figur 7 in einer ersten Kurvenfahr-Situation dargestellt. Wie sich aus einem Vergleich der Figuren 8a und 9a ergibt, ist die Deichsel 106 aus der in Figur 8a dargestellten Position um einen Winkel α um die Deichseldrehachse 108 verschwenkt worden. Diese Verschwenkung der Deichsel 106 bewirkt, dass über die Kette 110 die Lenkrollen 112, 114 derartig verschwenkt werden, dass die Rollenachsen 126 und 166 einen gemeinsamen Schnittpunkt 170 aufweisen. Dies wird dadurch erreicht, dass die Kette 110 derartig überkreuzt geführt wird, insbesondere einen Kreuzungspunkt 172 aufweist, so dass eine Drehung der Deichsel 106 mit einem ersten Drehsinn um die Deichseldrehachse 108 zu einer gleichsinnigen Bewegung bzw. Drehung der Rollachse 126 um die Lenkachse 112 führt. Durch die Kreuzung der Kette bewirkt diese Drehung der Deichsel 106 jedoch eine gegensinnige Bewegung der Rollenachse 166 um die Lenkachse 118 im Vergleich zu dem Drehsinn der ersten Rollenachse 126. Aufgrund der Tatsache, dass die Lenkvorrichtung derartig ausgebildet wird, dass eine Drehung der Deichsel 106 um die Deichseldrehachse 108 direkt, d.h. mit einem Übertragungsverhältnis von eins auf die Lenkrollen 112 und 114 übertragen wird, werden die Rollenachsen 126, 166 ebenfalls um den Winkel α um die jeweilige Lenkachse 116 bzw. 118 verschwenkt. Die Bewegung der Deichsel 106 führt so also zu einer Einschwenkung der zwangsgelenkten Lenkrollen 112, 114.

Wird, wie in Figur 9b dargestellt, eine Zugkraft auf die Deichsel 106 entlang des Zugkraftvektors F' ausgeübt, beginnt der Transportwagen 100 sich zu bewegen. Aufgrund der freien Drehbarkeit der Lenkrollen 134 und 154 schwenken bei einer durch die Zugkraft F' hervorgerufenen Fahrbewegung diese frei drehbaren Lenkrollen 134, 154 auf die Fahrspur der Lenkrollen 112, 114 ein. Wie hierbei Figur 9b zu entnehmen ist, führt das Einschwenken der Lenkrollen 134 und 154 dazu, dass sich auch die Rollenachsen 142, 168 in den Schnittpunkt 170 sowohl gegenseitig als auch mit den Rollenachsen 126 und 166 schneiden.

Der Schnittpunkt 170 stellt auch gleichzeitig den Drehmittelpunkt für die Drehung des Transportwagens 100 dar. Aufgrund der Tatsache, dass sich die Rollenachsen 126, 142, 166, 168 in einem gemeinsamen Schnittpunkt 170 schneiden, wird ein Achsenfehler vermieden, so dass bei einer Bewegung des Transportwagens 100 kein "Radieren" der Lenkrollen auf einem Bodenbelag erfolgt. Somit erfüllen die Lenkrollen 112, 114, 134, 154 die Bedingungen für eine ideale Kurvenfahrt, da sich alle Radachsen 126, 142, 166 und 168 in dem Drehmittelpunkt 170 schneiden.

In Figur 10 ist eine schematische Unterseitenansicht des Transportwagens 100 der Figur 7 in einer zweiten Kurvenfahrtsituation dargestellt. Wie ein Vergleich der Figuren 9a und 10 zu entnehmen ist, wurde die Deichsel 106 aus der in Figur 9a dargestellten Position in den Winkel β um die Deichseldrehachse 108 weiter verschwenkt. Hierdurch kommt es ebenfalls zu einer Verschwenkung der Rollenachsen 126 als auch 166 aus der in Figur 8a dargestellten Position in den Winkel β.

Durch Ausübung einer Zugkraft entlang des Zugkraftvektors F" auf die Deichsel 106 werden die Lenkrollen 134 und 154 ebenfalls auf die Fahrspur des Transportwagens 100 eingeschwenkt und so kommt es zu einem Schneiden der Rollenachsen 126, 166, 142 und 168 in einem Schnittpunkt 174. Der Schnittpunkt 174 stellt wiederum den Drehmittelpunkt des Transportwagens 100 dar. Es ist somit möglich bei dem Transportwagen 100, ohne aufgrund der Anordnung der Lenkrollen in den Eckbereichen der Tragebene 104 einen Nachteil bei der Stabilität hinnehmen zu müssen, vergleichsweise starke Einschlagwinkel der Deichsel von bis zu 90° einzustellen, so dass der Wagen nahezu in der Lage ist, auf der Stelle zu drehen. Hierzu ergeben sich extrem kleine Wendkreise und eine extrem gute Wendigkeit.

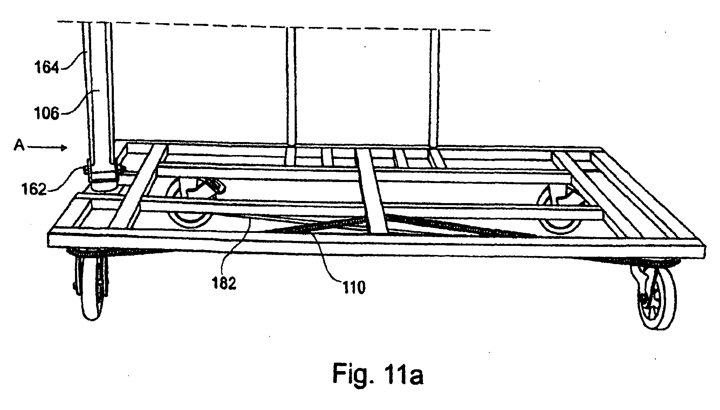

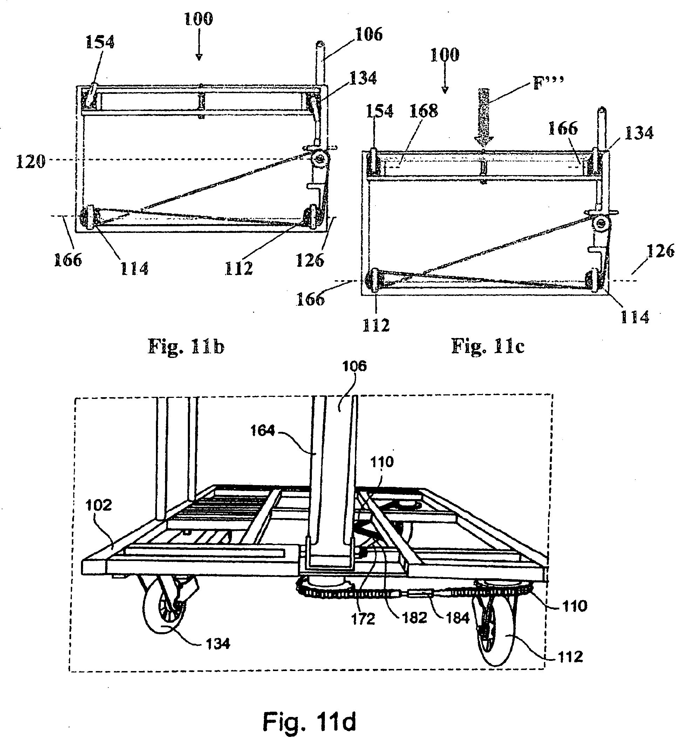

In den Figuren 11a bis 11e ist der Transportwagen 100 in einer sogenannten Querfahrtsituation dargestellt. Diese Situation ergibt sich insbesondere dann, wenn ein Zug, der mehrere Transportwagen wie Transportwagen 100 umfasst, entkoppelt wird, um dann die jeweiligen Transportwagen seitlich relativ zu der Hauptfahrtrichtung B zu verschieben. Wie sich aus den Figuren 11a und 11b, insbesondere bei einem Vergleich mit der Figur 10 ergibt, wird für eine entsprechende Querfahrt die Deichsel 106 solange weiter um die Deichseldrehachse 108 verschwenkt, bis der Winkel β bis auf 90° erhöht ist.

Wie insbesondere in Figur 11b dargestellt, führt dies zu einer parallelen Ausrichtung der Rollenachsen 166 und 126, die dann parallel zu der Schwerpunktachse 120 ausgerichtet sind. Bei einer derartigen Verschwenkung der Deichsel 106 im Stillstand des Transportwagens bleiben die frei drehbaren Lenkrollen 134 und 154 zunächst in der Figur 10 dargestellten Position stehen. Erst wenn eine in Figur 11c durch den Kraftfaktor F" angedeutete Kraft auf den Transportwagen 100 ausgeübt wird, schwenken auch die Lenkrollen 134 und 154 in die Fahrspur der Lenkrollen 112 und 114 ein. Entsprechend sind dann auch die Rollenachsen 142 und 168 sowohl parallel zu den Rollenachsen 126 und 166 als auch der Schwerpunktachse 120 ausgerichtet.

Somit wird durch diese Betätigung der Deichsel 106 eine reine Querfahrt des Transportwagens 100 ermöglicht. Da der Tragrahmen 102 jedoch weiterhin an allen vier Eckpunkten durch die Lenkrollen abgestützt wird, ist auch bei einer solchen Querfahrt eine größtmögliche Kippstabilität gegeben. Aufgrund der Tatsache, dass die Lenkrollen 134, 154 weiterhin frei drehbar sind, lässt sich darüber hinaus der Transportwagen auch bei einer Querfahrt in seiner Bewegungsrichtung korrigieren. Bei einer Querfahrt verhält sich der Transportwagen 100 daher wie ein aus dem Stand der Technik bekannter Transportwagen mit zwei im hinteren Bereich bezüglich einer Bewegungsrichtung angeordneten Lenkrollen und zwei im vorderen Bereich angeordneten Bockrollen. Besonders bevorzugt ist zumindest eine der Lenkrollen 112, 114, 134, 154 um die jeweilige Rollenachse 126, 142, 166, 168 feststellbar, um eine eigenständige Bewegung des Transportwagens beispielsweise aufgrund von Bodenunebenheiten, zu verhindern.

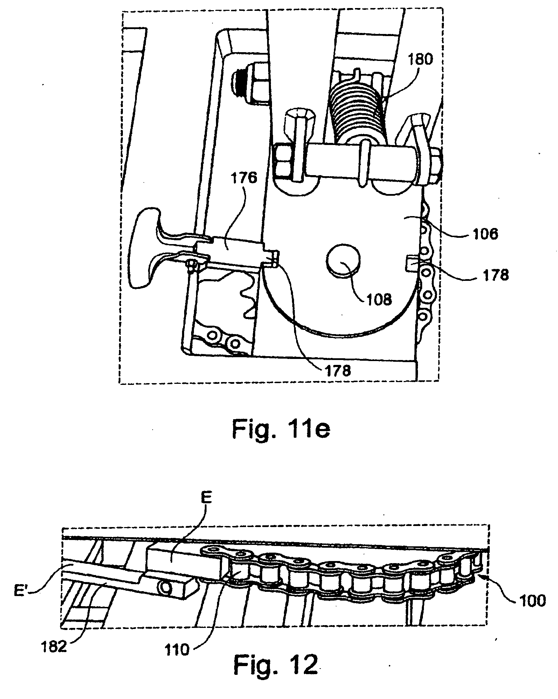

Wie Figur 11e zu entnehmen ist, ist im Bereich der Deichseldrehachse 108 eine Fixiereinrichtung in Form eines Schnappers 176, der in Ausnehmungen 178 der Deichsel 106 eingreifen kann, ausgebildet. Somit lässt sich die Deichsel 106, insbesondere in einer eine Querfahrt ermöglichenden Position verrasten, was zu einer präzisen Manövrierbarkeit des Transportwagens 100. Darüber hinaus ist der Figur 11a zu entnehmen, dass sich die Deichsel 106 um die Kippachse 162 derartig verkippen lässt, dass sie parallel zu einem Handgriff 164 ausgerichtet ist. Hierbei ist vorgesehen, dass die Deichsel 106 mit einem Federelement 180 in die Aufrechtposition gezwungen wird. Dieses Hochklappen der Deichsel 106 führt ferner dazu, dass die Deichsel 106 bei einer Querfahrt nicht über den Außenumfang des Tragerahmens 102 hinausragt.

In Figur 12 ist schließlich eine Detailansicht des Transportwagens 100 im Bereich der Kette 110 dargestellt. Wie der Figur 12 zu entnehmen ist, weist die Kette 110 eine erste Justier- bzw. Spannvorrichtung 182 in Form eines teleskopisch bewegbaren Flachelementes auf. Wie Figur 12 zu entnehmen ist, weist die Spannvorrichtung 182 eine im wesentlichen U-förmige Querschnittsform auf. Insbesondere ist die Spannvorrichtung 182 zu einer Erstreckungsebene E der Kette 110 in einer Ebene E' angeordnet. Dies bewirkt, wie Figur 11a zu entnehmen ist, dass die Spannvorrichtung 182 im Kreuzungspunkt 172 unterhalb der Kette 110 geführt wird, so dass eine reibungsfreie Kreuzung der Kette 110 in diesen Kreuzungsbereich 172 ermöglicht wird. Wie Figur 11d weiterhin zu entnehmen ist, weist die Kette 110 ein weiteres Spannelement in Form eines Schraubspanners 184, auf.

Schließlich ist in dem zwischen der ersten Lenkachse 116 und der zweiten Lenkachse 118 angeordneten Teil der Kette 110 ein weiteres Justier- bzw. Spannelement angeordnet, welches in den Figuren nicht dargestellt ist. Diese Spannelemente bzw. Justierelemente 182, 184 ermöglichen es, dass der Winkel der zwangsgesteuerten Lenkrollen, insbesondere der Verlauf der Rollenachse und die Ausrichtung der Deichsel, sauber aufeinander eingestellt werden können und darüber hinaus auch die Spannung der Kette 110 reguliert werden kann. Insbesondere das im Kreuzungsbereich 172 angeordnete spezielle Verbindungsteil 172 ermöglicht es, eine kollisionsfreie Führung der Kette und des Verbindungsteils 172 zu erreichen.

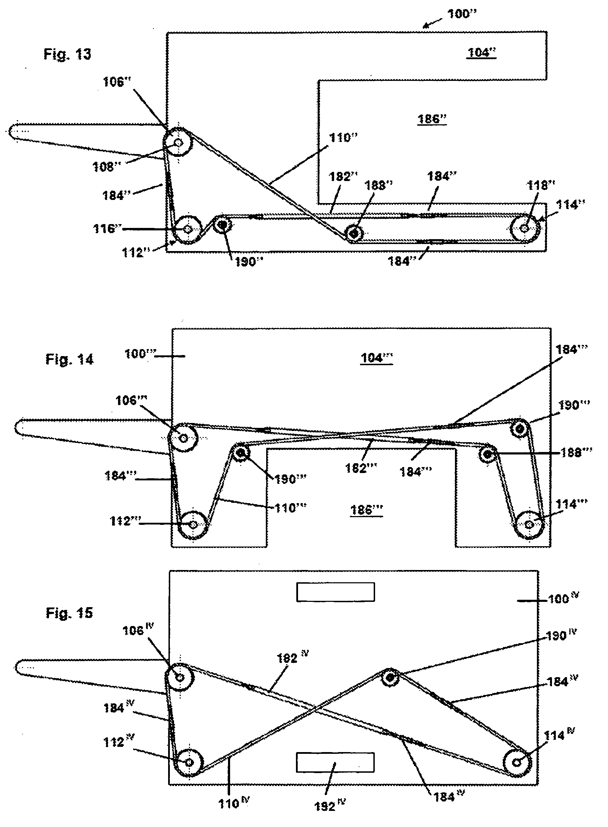

In Figur 13 ist eine schematische Unterseitenansicht einer dritten Ausführungsform eines erfindungsgemäßen Transportwagens 100" dargestellt. Diejenigen Elemente des Transportwagens 100", die denjenigen des Transportwagens 100 bzw. 100' entsprechen, tragen die gleichen Bezugszeichen, allerdings zweifach gestrichen.

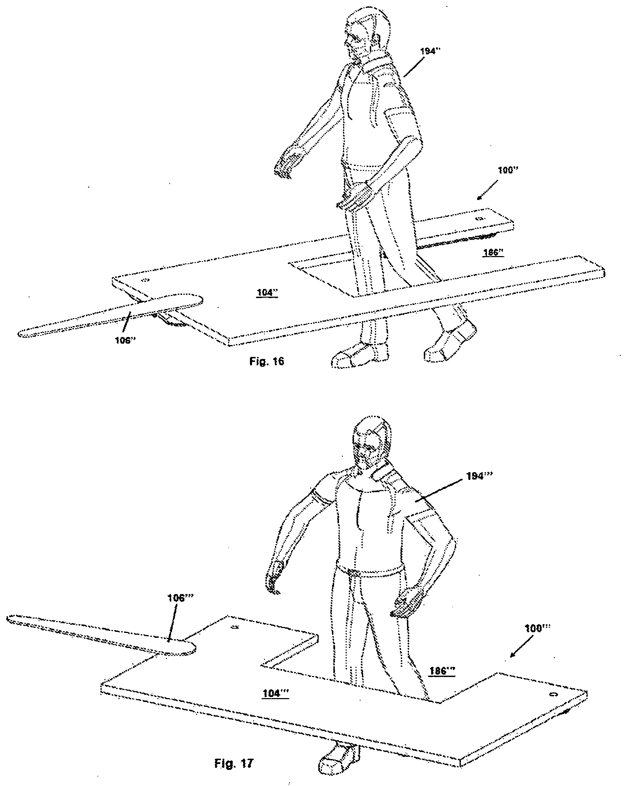

Wie Figur 13 insbesondere zu entnehmen ist, weist die Tragebene 104" im wesentlichen parallel zu der Hauptfahrtrichtung eine (gespiegelte) U-förmige bzw. senkrecht zu der Hauptfahrtrichtung eine C-förmige Grundfläche auf. Dies bedeutet, dass in der Grundfläche der Tragebene 104" eine Aussparung 186" ausgebildet ist. Wie später insbesondere anhand Figur 16 erläutert werden wird, ermöglicht es die Aussparung 186", dass für eine Person das Be- und Entladen des Transportwagens 100" erleichtert wird.

Wie sich insbesondere aus einem Vergleich der Figur 13 mit der Figur 8a ergibt, weist das Lenkungsglied in Form der Kette 110" einen abweichenden Verlauf auf. So wird die Kette 110" über Umlenkungseinrichtungen in Form von Umlenkrädern 188" bzw. 190" geführt. Dabei stellt das Umlenkrad 188" eine zweite Umlenkeinrichtung dar, während das Umlenkrad 190" eine dritte Umlenkeinrichtung darstellt. Wie Figur 13 weiter zu entnehmen ist, bewirkt die Führung der Kette 110" über die Umlenkräder 188" und 190", dass die Kette 110" nicht entlang einer direkten Verbindungslinie zwischen einem ersten Lenkungselement, wie der ersten Lenkrolle 112", und einem zweiten Lenkungselement in Form der zweiten Lenkrolle 114" geführt wird, sondern aus dieser direkten Verbindungslinie umgelenkt wird. Gleiches gilt für die Führung aufgrund des Umlenkrads 188", durch die die Kette 110" zwischen dem ersten Element in Form der zweiten Lenkrolle 114" und dem zweiten Element in Form der Deichsel 106" außerhalb einer direkten Verbindungslinie zwischen diesen Elementen geführt wird0. Durch diese Führung der Kette 110" wird insbesondere erreicht, dass die Kette 110" stets unterhalb der Tragebene 104" geführt wird, insbesondere nicht über diese hinaus steht.

Innerhalb der Kette 110" ist ebenfalls eine Spannvorrichtung 182" angeordnet, die eine kreuzungsfreie Führung der Kette 110" ermöglicht. Im Gegensatz zu der Kette 110 weist die Kette 110" jedoch mehrere Schraubspanner 184" auf, die jeweils zwischen der Deichsel 106" und der ersten Lenkrolle 112", der zweiten Lenkrolle 114" und der dem Umlenkrad 188" bzw. dem Umlenkrad 190" und der zweiten Lenkrolle 114" angeordnet sind. Dies ermöglicht es, dass nicht nur die relative Drehposition der Deichsel 106", der ersten Lenkrolle 112" sowie der zweiten Lenkrolle 114" verändert werden kann, sondern auch die Position der Umlenkräder 188" sowie 190" relativ hierzu.

In Figur 14 ist eine dritte Ausführungsform eines Transportwagens 100"' dargestellt. Die Elemente, die denjenigen des Transportwagens 100" funktional entsprechen, tragen die gleichen Bezugszeichen, allerdings dreifach gestrichen.

Wie der Figur 14 insbesondere zu entnehmen ist, weist der Transportwagen 100"' eine Aussparung 186'" auf, die nicht an einem hinteren Ende der Tragebene 104'" angeordnet ist, sondern an einer Seite der Tragebene 104'" bezüglich der Hauptfahrtrichtung des Transportwagens 100'" in Richtung der Deichsel 106"'. Die Tragebene 104"' weist also in eine Richtung parallel zu der Hauptfahrtrichtung eine (gespiegelte) C-förmige und senkrecht zu der Hauptfahrtrichtung (gespiegelte) U-förrnige Grundfläche auf. Alternativ können auch zwei oder mehr Aussparungen vorgesehen sein, die Grundfläche also H- oder W- bzw. doppelt U-förmig ausgebildet sein. Im Gegensatz zu dem Transportwagen 100" weist der Transportwagen 100'" mehrere Umlenkräder 190"' auf, umfasst also zwei dritte Umlenkeinrichtungen in Form der Umlenkräder 190"'. Dies ermöglicht es, dass die Aussparung 186'" auch an der Seite der Tragebene 104'" angeordnet werden kann, an der die beiden zwangsgelenkten Lenkrollen 112"' bzw. 114'" angeordnet sind.

In Figur 15 ist eine schematische Unteransicht eines Transportwagens 100^{IV} dargestellt. Dieser Transportwagen 100^{IV} gemäß einer vierten Ausführungsform der Erfindung ist derartig ausgestaltet, dass ein Tragrahmen des Transportwagens 100^{IV} Stützen 192^{IV} aufweist, die herabgesenkt werden können, um eine zusätzliche seitliche Fixierung des Transportwagens gegen ein Umkippen sicherzustellen. Diejenigen Elemente des Transportwagens 100^{IV}, die funktionell denjenigen des Transportwagen 100" entsprechen, tragen die gleichen Bezugszeichen, allerdings vierfach gestrichen.

Wie Figur 15 insbesondere zu entnehmen ist, wird durch die dritte Umlenkeinrichtung in Form des Umlenkrads 190^{IV} erreicht, dass die Kette 110^{IV} im Bereich zwischen der ersten Lenkrolle 112^{IV} und der zweiten Lenkrolle 114^{IV} aus der direkten Verbindungslinie zwischen den Lenkrollen, in deren Verlauf die Stütze 192^{IV} angeordnet ist, ausgelenkt wird, um so eine Führung 110^{IV} um die Stütze 192^{IV} herum zu erreichen.

Schließlich ist in den Figuren 16 und 17 eine perspektivische Aufsicht auf den Transportwagen 100" bzw. 100"' dargestellt. Wie den Figuren zu entnehmen ist, kann in die jeweiligen Aussparungen 186" bzw. 186'" eine Bedienperson 194" bzw. 194"' herein treten, um ein Be- und Entladen der Tragebene 104" bzw. 104"' derartig zu ermöglichen, dass die gesamte Tragebene 104" von der Bedienperon 194" bzw. 194'" erreichbar ist und jederzeit eine ergonomisch gute Position während der Be- und Entladung eingenommen werden kann.

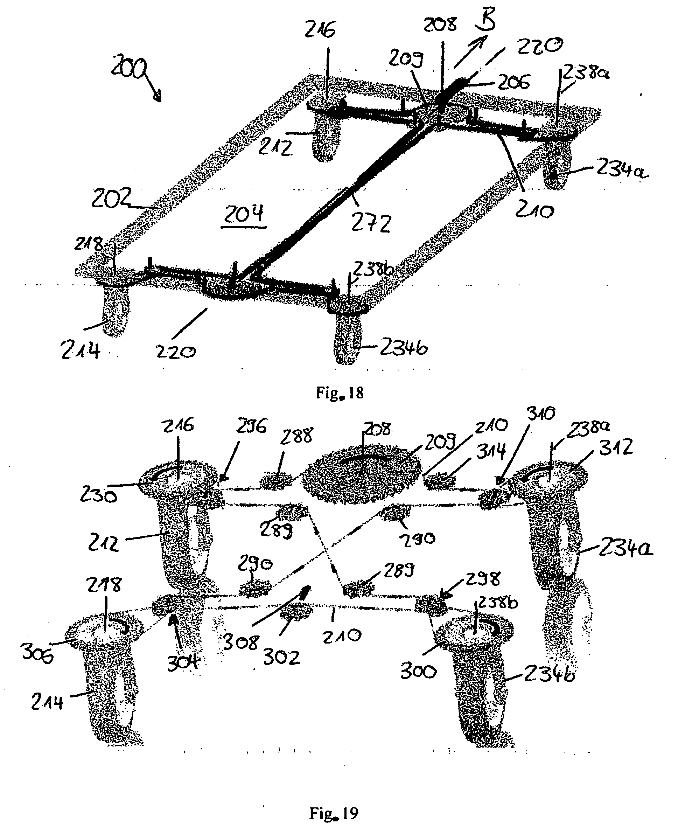

Im Nachfolgenden wird nun eine Ausfiihrungsform eines Transportwagens gemäß der eingangs erwähnten zweiten Alternative mit Hilfe der Figuren 18 bis 23 beschrieben. Hierbei ist zu beachten, dass dieser Transportwagen in weiteren Ausführungsformen auch die zuvor anhand der Figuren 2 bis 17 beschriebenen Eigenschaften aufweisen kann, insbesondere hinsichtlich der Form der Transportebene, hinsichtlich Aussparungen und Führung des Lenkungsgliedes aber auch hinsichtlich der Lagerung von Lenkrollen über eine Wippe, mit Ausnahme des Merkmals, dass die dritten Lenkrollen zwangsgelenkt sind.

In Figur 18 ist eine perspektivische Aufsicht auf eine weitere Ausführungsform eines Transportwagens 200 dargestellt. Diejenigen Elemente des Transportwagens 200, die denjenigen des Transportwagen 100 entsprechen, tragen die gleichen Bezugzeichen, allerdings um 100 erhöht.

Insbesondere weist auch der Transportwagen 200 einen Tragrahmen 202 auf. Durch den Tragrahmen 202 wird eine Tragebene 204 aufgespannt. In einer Hauptfahrtrichtung B ist eine Deichsel 206 angeordnet. Die Deichsel 206 ist um ein Deichseldrehachse 208 drehbar. Die Deichsel 206 ist mittels eines Deichselverbindungselements in Form eines Deichselkettenrades 209, welches drehmitnahmesicher mit der Deichsel 206 verbunden ist und ebenfalls um die Deichseldrehachse 208 drehbar ist, mit einem Lenkungsglied in Form einer Kette 210 in Verbindung.

Über die Lenkungsvorrichtung, die im Nachfolgenden detaillierter beschrieben wird, wird eine Drehung der Deichsel 206 um die Deichseldrehachse 208 auf eine erste zwangsgelenkte Lenkrolle 212 sowie eine zweite zwanggelenkte Lenkrolle 214 übertragen. Dabei erfolgt eine Drehung der ersten Lenkrolle 212 um eine erste Lenksache 216 während einer Drehung der zweiten Lenkrolle 214 um eine zweite Lenksachse 218 erfolgt. Wie Figur 18 insbesondere zu entnehmen ist, sind die erste Lenkrolle 212 und die zweite Lenkrolle 214 bezüglich einer Schwerpunktachse 220 des Transportwagens 200 auf einer ersten Seite angeordnet. Die ersten und zweiten Lenkrollen sind insbesondere gemäß der in Figur 3 dargestellten Lenkrolle 112 ausgebildet.

Im Gegensatz zu dem zuvor beschriebenen Transportwagen weist der Transportwagen 200 hingegen dritte Lenkrollen 234a, 234b auf, als eine erste dritte Lenkrolle 234a und eine zweite dritte Lenkrolle 234b, die ähnlich den ersten und zweiten Lenkrollen 212, 214 derartig zwangsgelenkt sind, dass eine Drehbewegung der Deichsel 206 um die Deichseldrehachse 208 auf die Lenkrollen 234a, 234b derartig übertragen wird, dass diese um entsprechende Lenkachsen 238a, 238b gedreht werden. Obwohl in der in Figur 18 dargestellten Ausführungsform die Lenkrollen 234a, 234b direkt an dem Tragrahmen 202 befestigt sind, ist auch vorstellbar, dass die Lenkrollen über eine Wippe, wie sie zuvor beschrieben wurde, mit dem Tragrahmen 202 verbunden sind. Die dritten Lenkrollen 234a, 234b weisen vorzugsweise einen vergleichbaren Aufbau wie die in Figur 3 dargestellte Lenkrolle 112 auf.

Obwohl in Figur 18 nicht explizit dargestellt, kann die Deichsel 206 einen ähnlichen Aufbau, insbesondere eine ähnliche Funktionsweise, wie die Deichsel 106, insbesondere hinsichtlich ihrer Kippbarkeit und ihrer Arretierung bzw. Fixierung aufweisen.

In Figur 19 ist eine perspektivische Aufsicht auf die Lenkrollen sowie die Lenkungsvorrichtung des Transportwagens 200 dargestellt. Insbesondere die in Figur 19 dargestellten Elemente stellen einen Zubehörkit dar, welches unabhängig von dem Transportwagen beansprucht wird, insbesondere unabhängig von einem Transportwagen vertrieben werden kann, um einen Transportwagen mit den zuvor und im Nachfolgenden beschriebenen vorteilhaften Eigenschaften, insbesondere einer guten Maneuvrierbarkeit, hohen Wendigkeit und der Reduzierung einer Radierwirkung bei gleichzeitiger Möglichkeit einer Querbewegung auszustatten.

In Figur 19 sind insbesondere die erste Lenkrolle 212 ,die zweite Lenkrolle 214, die erste dritte Lenkrolle 234a und die zweite dritte Lenkrolle 234b zu erkennen. Wie der Figur 19 weiter zu entnehmen ist, wird die Kette über ein Deichsel-Verbindungselement in Form des Deichselkettenrads 209 geführt. Des Weiteren wird die Kette 210 zwischen der Deichsel bzw. dem Deichselkettenrad 209 über eine erste Umlenkeinrichtung in Form eines Umlenkrads 288 geführt. Über ein später detaillierter erläutertes Umlenkgetriebe 296 wird die Bewegung der Kette 210 mittels eines als erstes Verbindungselement bzw. als (Lenkrollen-)Kettenrad dienenden Zahnrads 230 auf die erste Lenkrolle 212 zur Drehung um die erste Lenkachse 216 übertragen.

Von dem Umlenkgetriebe 296 ausgehend wird die Kette 210 über eine dritte Umlenkeinrichtung in Form der Umlenkräder 289 zu einem Umlenkgetriebe 298 geführt, um eine Bewegung der Kette 210 auf die zweite dritte Lenkrolle 234b zu einer Drehung um die zweite dritte Lenkachse 238b zu übertragen. Ausgehend von dem Umlenkgetriebe 298, welches eine Bewegung der Kette 210 auf eine drehmitnahmesicher mit der zweiten dritten Lenkrolle 234b verbundenes zweites drittes Verbindungselement in Form eines Zahnrades 300 überträgt, wird die Kette 210 über eine sechste Umlenkeinrichtung in Form eines Spannkettenrads 302 zu einem Umlenkgetriebe 304, mittels dem dann eine Bewegung der Kette 210 mittels eines zweiten Verbindungselements in Form des Zahnrads 306 auf die zweite Lenkrolle 214 zu einer Drehung um die Lenkachse 218 übertragen werden kann, geführt.

Das Zahnrad 306 wird über eine geeignete, nicht dargestellte Vorrichtung in Richtung einer Spannkraft 308 vorgespannt. Dadurch wird erreicht, dass auf zusätzliche Spannelemente innerhalb der Kette 210 verzichtet werden kann und trotzdem eine ausreichende Spannung der Kette 210 erzielt wird. Nichts desto trotz kann natürlich die Verwendung eines Spannkettenrads wie des Zahnrades 306 mit der Verwendung von Spannelementen innerhalb des Lenkungsgliedes, wie sie zuvor beschrieben, vorgesehen sein.

Von dem Umlenkgetriebe 304 wird die Kette 210 über zweite Umlenkeinrichtungen in Form der Umlenkräder 290 zu einem mit der ersten dritten Lenkrolle in Verbindung stehenden Umlenkgetriebe 310 geführt. Mittels des Umlenkgetriebes 310 wird eine Bewegung der Kette 210 auf eine drehmitnahmesicher mit der ersten dritten Lenkrolle 234a verbundenes erstes drittes Verbindungselement in Form eines Zahnrads 312 übertragen. Dadurch wird eine Bewegung der Kette 210 in eine Drehung der ersten dritten Lenkrolle 234a um die Lenkachse 238a umgesetzt. Anschließend wird die Kette 210 über eine vierte Umlenkeinrichtung in Form eines Umlenkrads 314 zu der Deichsel bzw. dem Deichselkettenrad 209 zurückgeführt.

Wie insbesondere den in Figur 19 im Bereich der jeweiligen Zahnräder, Umlenkräder bzw. dem Spannkettenrad und dem Deichselkettenrad dargestellten Pfeilen zu entnehmen ist, führt eine Bewegung der Kette 210, insbesondere aufgrund einer Drehung des Deichselkettenrads 209 in der durch den Pfeil angezeigten Form dazu, dass die erste Lenkrolle 212 mit einem ersten Drehsinn, der dem Drehsinn der zweiten Lenkrolle 214 entgegen gesetzt ist, gedreht wird, während die erste dritte Lenkrolle im gleichen Drehsinn wie die erste Lenkrolle gedreht wird, wohin gegen die zweite dritte Lenkrolle mit dem gleichen Drehsinn wie die zweite Lenkrolle 214 gedreht wird, jedoch in dem entgegengesetzten Drehsinn zu der ersten dritten Lenkrolle 234a.

In der in Figur 19 bzw. den Figuren 18 bis 23 dargestellten Ausführungsform eines Transportwagens 200 ist ein Lenkungsglied in Form der Kette 210 vorgesehen, welches einteilig ausgebildet ist. Insbesondere ist vorgesehen, dass mittels einer einzigen Kette 210 alle zwangsgelenkten Lenkrollen direkt angesteuert werden. In weiteren, nicht dargestellten, Ausführungsformen kann vorgesehen sein, dass das Lenkungsglied mehrteilig ausgebildet ist, insbesondere ein erstes Lenkungsgliedteil vorgesehen ist, mittels dem eine Ansteuerung der ersten Lenkrolle 212 und der ersten dritten Lenkrolle 234a erfolgt. Ein zweites Lenkungsgliedteil in Form einer davon getrennten Kette kann vorgesehen sein, um die zweite Lenkrolle 214 und die zweite dritte Lenkrolle 243b anzusteuern.

Um eine Übertragung der Bewegung der Deichsel 206 auf die jeweiligen Lenkungsgliedteile zu erzielen, kann dabei vorgesehen sein, dass das erste Lenkungsgliedteil über das Deichselkettenrad 209 direkt angetrieben wird, während das zweite Lenkungsgliedteil durch eine Drehung des Kettenrads 302 direkt angetrieben wird. Durch eine entsprechende Verbindung der Kettenräder 209 und 302, beispielsweise über ein weiteres drittes Lenkungsgliedteil, wie eine einzelne Kette, kann dann eine Bewegung der Deichsel 206 bzw. des Deichselkettenrads 209 direkt auf das Kettenrad 302 übertragen werden, welches dann wiederrum das zweite Lenkungsgliedteil antreibt. Bevorzugt ist hierbei dieses dritte Lenkungsgliedteil im Bereich der Schwerpunktachse 220 des Transportwagens 200 angeordnet, um entsprechende Aussparungen im Bereich der Tragebene 204 für ein einfaches Be- und Entladen, wie sie zuvor anhand der Transportwagen 100", 100'" beschrieben wurden, zu ermöglichen.

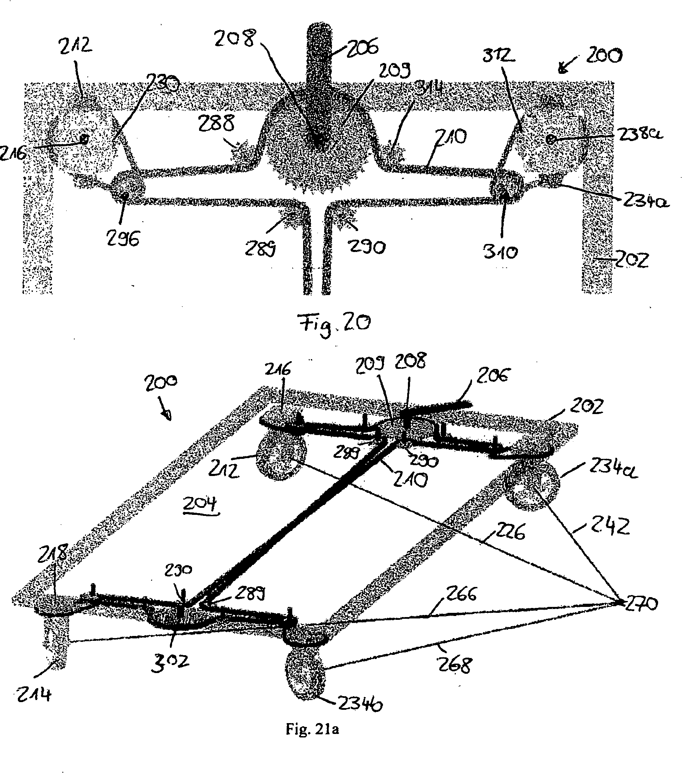

In Figur 20 ist eine Aufsicht auf einen Teil des Transportwagens 200 dargestellt, genauer dem Bereich der Deichsel 206, der ersten Lenkrolle 212 und der ersten dritten Lenkrolle 234a. Wie Figur 20 zu entnehmen ist, sind die erste Lenkrolle 212 und die erste dritte Lenkrolle 234a parallel zueinander ausgerichtet, wenn die Deichsel 206 mit einer Hauptfahrtrichtung B des Transportwagens 200 einen Winkel von 0° einschließt.

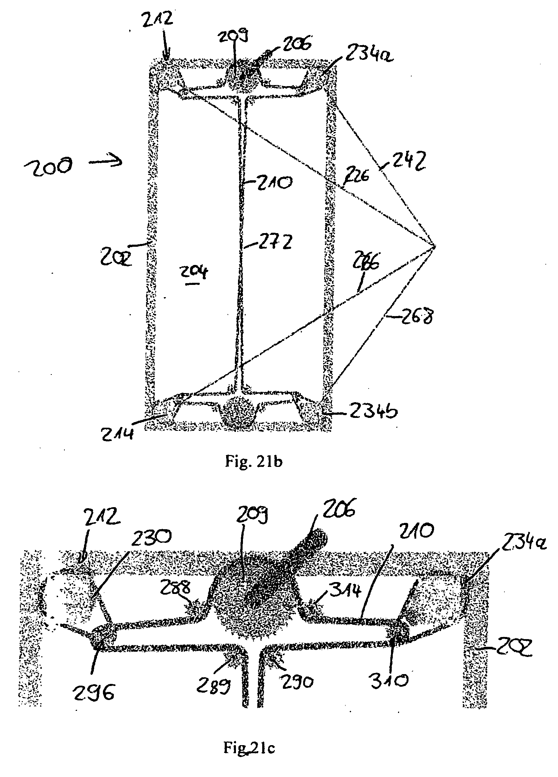

In den Figuren 21a bis 21c ist der Transportwagen 200 in einer Position dargestellt, in der die Deichsel 206 einen Winkel von 45° mit der Hauptfahrtrichtung B einschließt. Dabei zeigt Figur 21a in perspektivischer Aufsicht auf den Transportwagen 200, Figur 21b eine direkte Aufsicht auf den Transportwagen 200 und Figur 21c eine Aufsicht auf den Teilbereich des Transportwagens 200, wie er ebenfalls auch in Figur 20 dargestellt ist. Bei einer Bewegung der Deichsel 206 aus der in Figur 20 dargestellten Position in die in den Figuren 21a bis 21c dargestellte Position wird die Deichsel 206 durch einen ersten Bewegungsbereich bewegt.

In diesem ersten Bewegungsbereich wird, wie später erläutert werden wird, durch die Umlenkgetriebe 296, 298, 304, 310 erreicht, dass die Lenkrollen 212, 214, 234a, 234b derartig ausgerichtet werden, dass die kurveninneren Lenkrollen, nämlich die erste dritte Lenkrolle 234a und die zweite dritte Lenkrolle 234b, um einen größeren Drehwinkel gedreht werden als die kurvenäußeren Lenkrollen in Form der ersten Lenkrolle 212 und der zweiten Lenkrolle 214. Dabei erfolgt die Drehung der Lenkrollen derartig, dass, wie in den Figuren 21a und 21b dargestellt, sich die entsprechenden Rollenachsen 226 der ersten Lenkrolle 212, die Rollenachse 266 der zweiten Lenkrolle 214, die Rollenachse 242 der ersten dritten Lenkrolle 234a als auch die Rollenachse 268 der zweiten dritten Lenkrolle 234b in einem gemeinsamen Schnittpunkt 270 schneiden. Dies bedeutet nichts anderes als das die Lenkrollen 212, 214, 234a, 234b tangential zu den beiden theoretischen Kurvenradien ausgerichtet werden. Dadurch wird ein Schieben oder Radieren der Lenkrollen 212, 214, 234a, 234b bei Kurvenfahrten verhindert, zumindest deutlich gemindert und damit der Verschleiß minimiert.

Insbesondere bei der zuvor beschriebenen alternativen Ausführungsform, bei welcher mehrere Lenkungsgliedteile, insbesondere getrennte Ketten, vorgesehen sind, um die vorderen Lenkrollen, also die erste Lenkrolle und die erste dritte Lenkrolle, einerseits und die hinteren Rollen, also die zweite Lenkrolle und die zweite dritte Lenkrolle, andererseits anzusteuern, kann erreicht werden bzw. eingestellt werden, dass der Schnittpunkt 270 mittig zwischen der ersten und zweiten Lenkrolle bzw. der ersten dritten und der zweiten dritten Lenkrolle liegt. Dadurch wird noch zusätzlich ein Schieben oder Radieren der Lenkrollen bei Kurvenfahrten minimiert bzw. verhindert.

Darüber hinaus können aufgrund der Tatsche, dass alle vier Lenkrollen einschwenken sehr kleine Kurvenradien gefahren werden und der Transportwagen 200 kann auf einer sehr kleinen Fläche rangiert werden und zwar aufgrund der Zwangslenkung aller vier Lenkrollen sehr präzise.

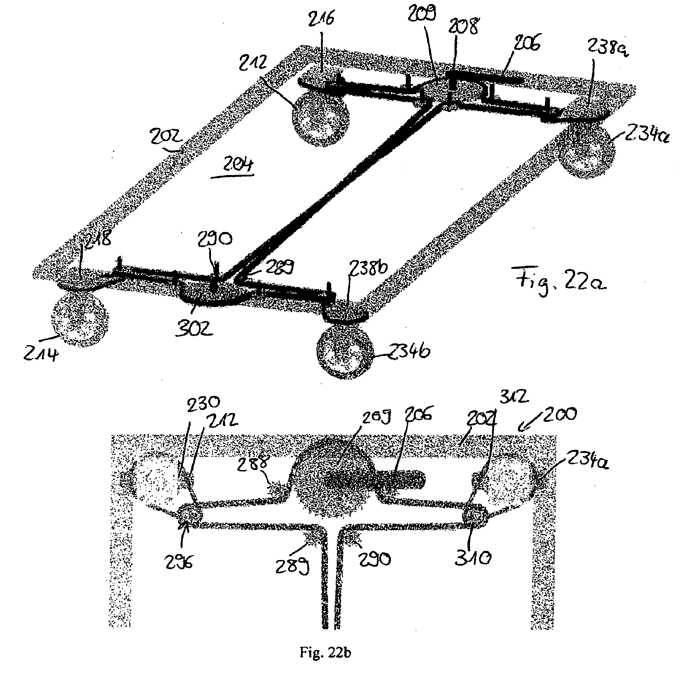

Der erfindungsgemäße Transportwagen 200 zeichnet sich jedoch insbesondere durch das weitere Merkmal aus, dass die Übersetzung der Drehbewegung auf die kurveninneren Lenkrollen, also die erste dritte Lenkrolle 234a und die zweite dritte Lenkrolle 234b, bei einer weiteren Drehung der Spindel 206 nicht beibehalten wird, sondern in eine geringere Übersetzung, insbesondere in eine Untersetzung, übergeht. Hingehen geht das Übersetzungsverhältnis hinsichtlich der kurvenäußeren Lenkrollen, also der ersten und zweiten Lenkrolle, die insbesondere im Bereich einer Untersetzung bei einer Drehung der Drehspindel bis zu einem Winkel von 45° liegt, in einer Übersetzung über, so dass bei einer kompletten Drehung der Deichsel um 90° die in den Figuren 22a und 22b dargestellte Position erreicht wird.

Wie sich aus der perspektivischen Aufsicht 22a sowie der Teilansicht 22b ergibt, führt die Veränderung des Übersetzungsverhältnisses dazu, dass die kurvenäußeren Lenkrollen, also die Lenkrollen 212, 214 in dem angegebenen Beispiel, die Drehbewegung der kurveninneren Lenkrollen, also der Lenkrollen 234a, 234b in dem dargestellten Beispiel, einholen. Insbesondere ist bei einer Drehung der Deichsel in Bezug auf die Hauptfahrtrichtung B um einen Winkel von 90° eine parallele Ausrichtung der Rollenachsen der Lenkrollen 234a, 234b, 212, 214 erreicht, so dass alle Lenkrollen ebenfalls um 90° ausgelenkt sind und so eine Querbewegung des Transportwagens 200 ermöglicht wird.

Insbesondere im Vergleich zu einem Transportwagen, bei dem die dritten Lenkrollen frei drehbar sind, wird bei dem Transportwagen 200 eine höhere Stabilität erreicht, insbesondere eine nicht gradlinige Querbewegung des Transportwagens 200 durch eine ungewollte Verdrehung der dritten Lenkrollen verhindert.

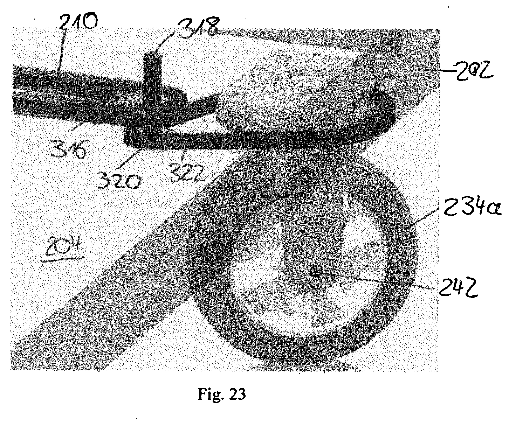

Anhand von Figur 23 wird nun die Funktionsweise der Umlenkgetriebe 296, 298, 304, 310 genauer erläutert. In Figur 23 ist eine Detailansicht des Transportwagens 200 im Bereich der ersten dritten Lenkrolle 234a dargestellt. Wie Figur 23 weiterhin zu entnehmen ist, umfasst das Umlenkgetriebe 310 eine siebte, genauer eine erste siebte, Umlenkeinrichtung in Form eines Exzenter-Kettenrads 316. Das Exzenter-Kettenrad 316 ist um eine Drehachse 318 drehbar gelagert. Auf der gleichen Drehachse 318 ist ferner drehmitnahmesicher mit dem Exzenter-Kettenrad 316 ein Getriebe-Verbindungselement in Form eines Schwenkkettenrads 320 angeordnet. Eine Drehung des Schwenkkettenrads 320 wird über ein Umlenkgetriebeglied in Form einer Rollenkette 322 auf das Zahnrad 312 übertragen. Hieraus ergibt sich, dass durch ein Schwenken der Deichsel 206 über das Deichselkettenrad 209 die Kette 210 bewegt wird und damit über das Umlenkkettenrad 314 das exzentrisch gelagerte Exzenter-Kettenrad 316 bewegt wird. Durch die exzentrische Lagerung ergibt sich ein vom Drehwinkel der Deichsel abweichender Drehwinkel des Exzenter-Kettenrads 316. Insbesondere erfolgt zunächst eine Übersetzung der Bewegung. Die Bewegung des Exzenter-Kettenrads 316 wird an das konzentrisch zu der Exzenter-Kettenradlagerung angeordnete Schwenkkettenrad 320 weitergegeben, dass dann, über die Rollenkette 322, das an der Lenkrolle 234a drehmitnahmesicher, insbesondere ohne eine Ausladung eines angebrachten, Zahnrad 312 bewegt und damit die Lenkrolle 234a um die Lenkachse 238 bewegt.

Aufgrund der exzentrischen Ausbildung bzw. Lagerung des Exzenter-Kettenrads 316 wird über einen Winkelbereich von 0 - 45° der Deichsel zunächst eine Übersetzung der Bewegung erreicht, während anschließend in einem Winkelbereich von 45° bis 90° eine Untersetzung erfolgt. Aufgrund einer spiegelsymmetrischen Anordnung der Exzenter-Kettenräder der Umlenkgetriebe 296, 310 bzw. 298, 304 wird erreicht, dass in dem ersten Bewegungsbereich zunächst für die erste Lenkrolle eine Untersetzung erfolgt, während in dem zweiten Bewegungsbereich eine Übersetzung erfolgt, so dass nach einer Drehung der Deichsel um 90° auch die Lenkrollen einen Winkel von 90° durchlaufen haben. Dazu ist vorgesehen, dass das Zahnverhältnis des Deichselkettenrads zu dem Exzenter-Kettenrad zum Beispiel 4 zu 1 beträgt, so dass ein Schwenken der Deichsel um 90° zu einem Schwenken des Exzenter-Kettenrads um 360° führt. Weiterhin weist das Schwenkkettenrad 320 zu dem Zahnrad 312 zum Beispiel ein Zahnverhältnis von 1 zu 4 auf, so dass durch eine Bewegung des Exzenter-Kettenrads um 360° ein Schwenkwinkel der Lenkrolle 234a um 90° erreicht wird. Ein spiegelsymmetrische Anordnung der Exzenter-Kettenräder der ersten dritten Lenkrolle 234a und der ersten Lenkrolle 212 bzw. der zweiten dritten Lenkrollen 234b im Vergleich zu der zweiten Lenkrolle 214 führen zu einem gegenläufigen Drehen der jeweiligen Exzenter-Kettenräder.

Hingegen sin die Exzenter-Kettenräder der ersten und zweiten Lenkrolle gleichsinnig angeordnet, um die gleiche Übersetzung des Untersetzungsverhältnisses für die jeweiligen Drehwinkel der Deichsel bezüglich der Fahrrichtung der hinter einander liegenden Lenkrollen zu erreichen. Der gegensinnige Drehsinn der Drehrollen wird dadurch erreicht, dass die Kette 210 einen Kreuzungspunkt 272 aufweist. Mit anderen Worten sind die der Deichsel zugewandten Lenkrollen, also die vorderen Rollen jeweils diagonal mit den der Deichsel abgewandten Lenkrollen, also der hinteren Rollen verbunden, so dass sich die Kette 210 in der Wagenmitte 272 kreuzt. Um eine durch die exzentrische Bewegung der jeweiligen Kettenräder ergebene Änderung der Kettenlänge 210 zu kompensieren, ist insbesondere vorgesehen, dass die Exzenter-Kettenräder der hinteren Lenkrollen, also der Lenkrollen 214, 234b jeweils um 180° im Vergleich zu den Exzenter-Kettenrädern im Bereich der ersten Lenkrolle 212 bzw. der ersten dritten Lenkrolle 234a, also der vorderen Lenkrollen, gedreht relativ zueinander angeordnet sind.

In der zuvor beschriebenen alternativen Ausführungsform, bei welcher ein mehrteiliges Lenkungsglied vorgesehen ist, ist dann insbesondere vorgesehen, dass die Exzenter-Kettenräder der Umlenkgetriebe 296, 310 über das erste Lenkungsgliedteil angesteuert werden, während die Exzenter-Kettenräder der Umlenkgetriebe 298, 304 über das zweite Lenkungsgliedteil angesteuert werden, insbesondere das zweite Lenkungsgliedteil über das Zahnrad 302 angetrieben wird und das erste Lenkungsgliedteil über das Zahnrad 209 angetrieben wird.

Bei dieser Ausführungsform wären dann weiterhin vier Umlenkgetriebe mit jeweiligen Exzenter-Kettenräder vorgesehen und zusätzlich müsste eine Vorrichtung zur Übertragung einer Bewegung des Zahnrads 209 bzw. der Deichsel 206 auf das Zahnrad 302, insbesondere zum Antrieb des zweiten Lenkungsgliedteiles, vorgesehen sein.

In weiteren alternativen Ausführungsformen hierzu kann auch vorgesehen sein, dass ein einzelnes Lenkungsgliedteil vorgesehen ist, über welches eine Bewegung der Deichsel 206 bzw. des Zahnrads 209 an die Exzenter-Kettenräder der Umlenkgetriebe 296, 310 übertragen wird. Im Gegensatz zu der in Figur 19 dargestellten Ausbildung kann dann vorgesehen sein, dass die Umlenkgetriebe 298, 304 keine eigenständigen Exzenter-Kettenräder vorsehen, sondern lediglich einzelne Schwenkkettenräder, wie das Schwenkkettenrad 320. Über entsprechende Übertragungseinrichtungen kann dann vorgesehen sein, dass die Bewegung von dem Umlenkgetriebe 296 an das Schwenkkettenrad des Umlenkgetriebes 304 übertragen wird, während mit einer weiteren Übertragungseinrichtung eine Bewegung des Umlenkgetriebes 310 auf das Schwenkkettenrad des Umlenkgetriebes 298 übertragen wird.

Anstelle der Übertragung auf die Schwenkkettenräder kann auch direkt eine Übertragung auf die Verbindungselemente der zweiten dritten Lenkrolle 234b, das Verbindungselement in Form des Zahnrads 300 bzw. das Verbindungselement in Form des Zahnrads 306 der zweiten Lenkrolle 214 vorgesehen sein. Diese Ausführungsform würde den Vorteil bieten, dass lediglich zwei Getriebeeinrichtungen mit entsprechenden Exzenter-Kettenräder ausgestattet sein müssten, nämlich lediglich diejenigen die zur Drehung der ersten Lenkrolle und der ersten dritten Lenkrolle vorgesehen sind, während eine Bewegung der hinteren Lenkrollen durch eine Übertragung der Bewegung des Exzenter-Kettenrads aus diesen Umlenkgetrieben erfolgt. Es wird also vorgeschlagen, dass eine einzelne siebte Umlenkeinrichtung in Form eines exzentrisch gelagerten Kettenrads mit zwei Lenkrollen in Wirkverbindung steht, insbesondere eine erste siebte Umlenkeinrichtung einer kurvenäußeren Lenkrolle mit der weiteren kurvenäußeren Lenkrolle in Wirkverbindung steht.

Durch diese Ansteuerung der Lenkrollen über eine einzelne siebte Umlenkeinrichtung wird der Gleichlauf der Drehbewegung der kurveninneren bzw. kurvenäußeren Lenkrollen verbessert. Auch kann auf ein zweites Lenkungsgliedteil verzichtet werden und es wird eine Positionierung des Schnittpunkts der Rollenachsen des Transportwagens in der Mitte der Längsachse des Transportwagens erreicht und so ein Radieren bzw. Schieben noch besser zu vermeiden.

Es wird nochmals daraufhin gewiesen, dass der Transportwagen 200 auch noch weitere Merkmale des Transportwagens 100 aufweisen kann, insbesondere wird durch die Führung der Kette 210 ebenfalls erreicht, dass entsprechende Aussparungen gebildet werden können, um ein leichtes Be- und Entladen des Transportwagen 200 zu ermöglichen.

### Bezugszeichen

- 1: Tragrahmen
- 3: Tragebene
- 5: Deichsel
- 7: Kupplungsvorrichtung
- 9: Drehachse
- 11: Drehschemel
- 13: Bockrolle
- 15: Kettenlenkung
- 17: Drehschemel
- 19: Drehachse
- 21: Bockrolle
- 23: Lenkrolle
- 25: Lenkrolle
- 27: Stütze
- 100, 100', 100", 100"', 100^{IV}: Transportwagen
- 102: Tragrahmen
- 104, 104", 104": Tragebene
- 106, 106", 106"', 106^{IV}: Deichsel
- 108, 108": Deichseldrehachse
- 110, 110", 110"', 110^{IV}: Kette
- 112, 112", 112"', 112^{IV}: Lenkrolle
- 114, 114", 114"', 114^{IV}: Lenkrolle
- 116, 116": Lenkachse
- 118, 118": Lenkachse
- 120: Schwerpunktachse
- 122: Vorsprung
- 124: Rollelement
- 126: Rollenachse
- 128: Anschraubplatte
- 130: Zahnrad
- 132: Lenkgabel
- 134, 134': Lenkrolle
- 136: Anschraubplatte
- 138: Lenkachse
- 140: Rollelement
- 142: Rollenachse
- 144: Lenkgabel
- 146: Wippe
- 148: Träger
- 150: Ende
- 152: Ende
- 154: Lenkrolle
- 156: Anschraubplatte
- 158: Befestigungseinrichtung
- 160: Wippachse
- 162: Deichselkippachse
- 164: Handgriff
- 166: Rollenachse
- 168: Rollenachse
- 170: Schnittpunkt
- 172: Kreuzungspunkt
- 174: Schnittpunkt
- 176: Schnapper
- 178: Ausnehmung
- 180: Federelement
- 182, 182", 182"', 182^{IV}: Spannvorrichtung
- 184, 184 ", 184'", 184^{IV}: Schraubspanner
- 186", 186'": Aussparung
- 188", 188"': Umlenkrad
- 190", 190"', 190^{IV}: Umlenkrad
- 192^{IV}: Stütze
- 194", 194"': Bedienperson

- 200: Transportwagen
- 202: Tragrahmen
- 204: Tragebene
- 206: Deichsel
- 208: Deichseldrehachse
- 209: Deichselkettenrad
- 210: Kette
- 212: Lenkrolle
- 214: Lenkrolle
- 216: Lenkachse
- 218: Lenkachse
- 220: Schwerpunktachse
- 226: Rollenachse
- 230: Zahnrad
- 234a, 234b: Lenkrolle
- 238a,238b: Lenkachse
- 242: Rollenachse
- 266: Rollenachse
- 268: Rollenachse
- 270: Schnittpunkt
- 272: Kreuzungspunkt
- 288: Umlenkrad
- 289: Umlenkrad
- 290: Umlenkrad
- 296: Umlenkgetriebe
- 298: Umlenkgetriebe
- 300: Zahnrad
- 302: Spannkettenrad
- 304: Umlenkgetriebe
- 306: Zahnrad
- 308: Spannkraft
- 310: Umlenkgetriebe
- 312: Zahnrad
- 314: Umlenkrad
- 316: Exzenter-Kettenrad
- 318: Drehachse
- 320: Schwenkkettenrad
- 322: Rollenkette

- A: Richtung
- B: Hauptfahrtrichtung
- C: Richtung
- F, F', F": Zugkraftvektor
- E, E': Ebene

- α, β: Winkel

## Patentansprüche

1. Transportwagen (100, 100', 100", 100"', 100^{IV}, 200) mit zumindest einem Tragrahmen (102, 202), einer in einer Hauptfahrtrichtung (B) vorne angeordneten und um zumindest eine Deichseldrehachse (108, 108", 208) drehbare Deichsel (106, 106", 106"', 106^{IV}, 206), eine Lenkungsvorrichtung (110, 110", 110"', 110^{IV}, 130, 210, 230, 289, 290) und zumindest eine erste, um eine erste Lenkachse (116, 116", 216) drehbare Lenkrolle (112, 112", 112"', 112^{IV}, 212), zumindest eine zweite, um eine zweite Lenkachse (118, 118", 218) drehbare Lenkrolle (114, 114", 114"', 114^{IV}, 214) und zumindest eine dritte, um eine dritte Lenkachse (138, 238a, 238b) drehbare Lenkrolle (134, 154, 234a, 234b), wobei die erste Lenkrolle (112, 112", 112"', 112^{IV}, 212) und die zweite Lenkrolle (114, 114", 114"', 114^{IV}, 214) derartig als zwangsgelenkte Lenkrollen ausgebildet sind, dass eine Drehbewegung der Deichsel (106, 106", 106"', 106^{IV}, 206) um die Deichseldrehachse (108, 108", 208) mittels der Lenkungsvorrichtung (110, 110", 110"', 110^{IV}, 130, 210, 230, 289, 290) auf die erste Lenkrolle (112, 112", 112"', 112^{IV}, 212) zur Drehung der ersten Lenkrolle (112, 112", 112"', 112^{IV}, 212) um die erste Lenkachse (116, 116", 216) und auf die zweite Lenkrolle (114, 114", 114"', 114^{IV}, 214) zur Drehung der zweiten Lenkrolle (114, 114", 114"', 114^{IV}, 214) um die zweite Lenkachse (118, 118", 218) übertragbar ist, **dadurch gekennzeichnet, dass**
die dritte Lenkrolle (134, 154) im wesentlichen frei um die dritte Lenkachse (138) drehbar gelagert ist,
die erste Lenkachse (116, 116", 216) und die zweite Lenkachse (118, 118", 218) bezüglich der Hauptfahrtrichtung (B) hintereinander und bezüglich einer in Hauptfahrtrichtung (B) und durch einen Schwerpunkt des Transportwagens (100, 100', 100", 100"', 100^{IV}, 200) verlaufenden Schwerpunktachse (120, 220) seitlich versetzt durch eine von dem Tragrahmen (102, 202) aufgespannten Tragebene (104, 104", 104"', 204) verlaufen und die dritte Lenkachse (138, 138a, 138b) auf der der ersten Lenkachse (116, 116", 216) und der zweiten Lenkachse (118, 118", 218) gegenüberliegenden Seite der Schwerpunktachse (120, 220) durch die Tragebene (104, 104", 104"', 204) verläuft.

2. Transportwagen nach Anspruch 1, **dadurch gekennzeichnet, dass**
eine Vielzahl von dritten Lenkrollen (134, 154, 234a, 234b) vorgesehen ist.

3. Transportwagen nach Anspruch 1 oder 2, **dadurch gekennzeichnet, dass**
die Deichsel (106) mittels zumindest einer Fixiereinrichtung (176, 178) in zumindest einer vorbestimmten Drehposition bezüglich der Deichseldrehachse (108), insbesondere relativ zu der Hauptfahrtrichtung (B), fixierbar ist, vorzugsweise in zumindest einer ersten Drehposition, in der eine erste Rollenachse (126) der ersten Lenkrolle (112) und eine zweite Rollenachse (166) der zweiten Lenkrolle (114) und/oder eine dritte Rollenachse der dritten Lenkrolle, insbesondere eine erste dritte Rollenachse der ersten dritten Lenkrolle und eine zweite dritte Rollenachse der zweiten dritten Lenkrolle, im wesentlichen parallel zu der Hauptfahrtrichtung (B) verlaufen und/oder in zumindest einer zweiten Drehposition, in der die erste Rollenachse (126) und die zweite Rollenachse (166) und/oder die dritte Rollenachse, insbesondere im wesentlichen senkrecht zu der Hauptfahrtrichtung (B) verlaufen.

4. Transportwagen nach einem der vorangehenden Ansprüche, **dadurch gekennzeichnet, dass**
die Lenkungsvorrichtung zumindest ein Lenkungsglied, wie zumindest eine Kette (110, 110", 110"', 110^{IV}, 210), zumindest einen Riemen, zumindest ein Seil, zumindest einen Draht, zumindest ein Stahlseil, zumindest ein Zahnradgetriebe, zumindest eine Übertragungswelle und/oder zumindest ein Gestänge, insbesondere Lenkgestänge, umfasst.

5. Transportwagen nach einem der vorangehenden Ansprüche, **dadurch gekennzeichnet, dass**
die Lenkungsvorrichtung zumindest eine Umlenkeinrichtung, insbesondere umfassend zumindest ein Umlenkrad (188", 188"', 190", 190"', 190^{IV}, 288, 289, 290, 302, 314, 316), eine Umlenkrolle und/oder ein Umlenkgetriebe, umfasst, wobei vorzugsweise mittels der Umlenkeinrichtung (188", 188"', 190", 190"', 190^{IV}, 288, 289, 290, 302, 314, 316) das zwischen einem ersten Lenkungselement, wie der Deichsel (106", 106"', 106^{IV}, 206), der ersten Lenkrolle (112", 112"', 112^{IV}, 212) oder der zweiten Lenkrolle (114", 114"', 114^{IV}, 214), und einem zweiten Lenkungselement, wie der ersten Lenkrolle (112", 112"', 112^{IV}, 212), der zweiten Lenkrolle (114", 114"', 114^{IV}, 214), oder der Deichsel (106", 106"', 106^{IV}, 206), verlaufende Lenkungsglied (110", 110"', 110^{IV}, 210) zumindest bereichsweise entlang einer von einer direkten Verbindungslinie zwischen dem ersten Lenkungselement und dem zweiten Lenkungselement abweichenden Führungsstrecke geführt wird.

6. Transportwagen nach einem der vorangehenden Ansprüche, **dadurch gekennzeichnet, dass**
die Lenkungsvorrichtung, insbesondere das Lenkungsglied (110, 110", 110"', 110^{IV}), zumindest ein Justierelement (182, 182", 182"', 182^{IV}, 184, 184", 184"', 184^{IV}) umfasst, mittels dem die relative Drehposition der Deichsel (106, 106", 106"', 106^{IV}) um die Deichseldrehachse (108, 108") und der ersten Lenkrolle (112, 112", 112"', 112^{IV}) um die erste Lenkachse (116, 116"), der Deichsel (106, 106", 106"', 106^{IV}) um die Deichseldrehachse (108, 108") und der zweiten Lenkrolle (114, 114", 114"', 114^{IV}) um die zweite Lenkachse (118, 118") und/oder der Deichsel (106, 106", 106"', 106^{IV}) um die Deichseldrehachse (108, 108") und/oder der ersten Lenkrolle (112, 112", 112"', 112^{IV}) um die erste Lenkachse (116, 116") und der zweiten Lenkrolle (114, 114", 114"', 114^{IV}) um die zweite Lenkachse (118, 118"), einstellbar ist.

7. Transportwagen nach einem der vorangehenden Ansprüche, **dadurch gekennzeichnet, dass**
die Lenkungsvorrichtung zumindest ein, insbesondere von dem Lenkungsglied, insbesondere der Kette (110, 110", 110"', 110^{IV}) und/oder dem Riemen, umfasstes Spannelement (182, 182", 182"', 182^{IV}, 184, 184", 184"', 184^{IV}) umfasst, wobei mittels des Spannelementes (182, 184) eine Länge eines Elementes, der Lenkungsvorrichtung (110, 110", 110"', 110^{IV}), einstellbar ist, wobei vorzugsweise das Justierelement (182, 182"', 182^{IV}, 184, 184", 184"', 184^{IV}) und das Spannelement zumindest bereichsweise in einem ausgebildet sind.

8. Transportwagen nach einem der vorangehenden Ansprüche, **dadurch gekennzeichnet, dass**
durch eine Drehung der Deichsel (106, 206) um die Deichseldrehachse (108, 208) mit einem ersten Drehsinn die erste Lenkrolle (112, 212) um die erste Lenkachse (116, 216) mit einem zweiten Drehsinn drehbar ist und die zweite Lenkrolle (114, 214) um die zweite Lenkachse (118, 218) mit einem dritten, dem zweiten Drehsinn entgegen gesetzten, Drehsinn drehbar ist, wobei vorzugsweise der erste Drehsinn gleich dem zweiten Drehsinn ist.

9. Transportwagen nach einem der vorangehenden Ansprüche, **dadurch gekennzeichnet, dass**
mittels der Lenkungsvorrichtung (110, 210) eine Drehung der Deichsel (106, 206) um die Deichseldrehachse (108, 208) mit einem Übersetzungsverhältnis auf die erste Lenkrolle (212) und/oder die zweite Lenkrolle (214) übertragbar ist, vorzugsweise untersetzt, insbesondere mit einem Übersetzungsverhältnis größer 1, übersetzt, insbesondere mit einem Übersetzungsverhältnis kleiner 1, oder direkt, insbesondere mit einem Übersetzungsverhältnis von eins, vorzugsweise auf die erste Lenkachse (116, 216) und/oder die zweite Lenkachse (118, 218) übertragbar ist.

10. Transportwagen nach Anspruch 9, **dadurch gekennzeichnet, dass**
das Übersetzungsverhältnis nicht konstant über den Drehbereich der Deichsel (206) um die Deichseldrehachse (208) ist, insbesondere über den Drehbereich zumindest bereichsweise, vorzugsweise nicht linear, ansteigt und/oder zumindest bereichsweise, vorzugsweise nicht linear, abnimmt, und/oder insbesondere mittels des Umlenkgetriebes (296, 298, 304, 310), eine Drehung der Deichsel (206) in einem ersten Winkelbereich mit einem Übersetzungsverhältnis von kleiner als eins an die, insbesondere ein kurveninneres Rad einer Bewegung des Transportwagens (200) darstellende, erste Lenkrolle (212) und/oder zweite Lenkrolle (214) übertragbar ist und in einem zweiten Winkelbereich mit einem Übersetzungsverhältnis von größer als eins an die, insbesondere ein kurvenäußeres Rad einer Bewegung des Transportwagens (200) darstellende, erste Lenkrolle (212) und/oder zweite Lenkrolle (214) übertragbar ist.

11. Transportwagen nach einem der Ansprüche 2 bis 10, **dadurch gekennzeichnet, dass**
zumindest zwei dritte Lenkrollen (134, 154) über zumindest eine Wippe (146) mit dem Tragrahmen (102) verbunden sind, vorzugsweise die Wippe (102) um zumindest eine senkrecht zu der Schwerpunktsachse (120), senkrecht zu der dritten Lenkachse (138) und/oder parallel zu der Tragebene (104) verlaufende Wippachse (160) drehbar ist.

12. Transportwagen nach Anspruch 11, **dadurch gekennzeichnet, dass**
die Drehung der Wippe (146) um die Wippachse (160), insbesondere mittels zumindest einer Begrenzungseinrichtung, begrenzbar ist, wobei vorzugsweise die Begrenzungseinrichtung zumindest einen Anschlag und/oder ein Element des Tragrahmens (102) umfasst.

13. Transportwagen nach einem der vorangehenden Ansprüche, **dadurch gekennzeichnet, dass**
die Deichseldrehachse (108, 208) und die Schwerpunktachse (120, 220) einen gemeinsamen Schnittpunkt aufweisen und/oder die Deichsel (106) zusätzlich um eine zu der Deichseldrehachse (108) im wesentlichen senkrechte Kippachse (162) verkippbar ist, vorzugsweise mittels eines Rückstellelementes, wie einem Federelement (180) in eine Position im wesentlichen senkrecht zu der Tragebene (104) vorgespannt ist.

14. Transportwagen nach einem der vorangehenden Ansprüche, **dadurch gekennzeichnet, dass**
der Transportwagen (100, 100', 200) als Hubwagen, Anhänger, Trailer und/oder Schubwagen ausgebildet ist.

15. Zug umfassend eine Vielzahl von, insbesondere mittels der jeweiligen Deichsel (106, 206) eines nachfolgenden Transportwagens (100, 100', 200), miteinander verbundene Transportwagen (100, 100', 200) nach einem der vorangehenden Ansprüche.

## Claims

1. Trolley (100, 100', 100", 100"', 100^{IV}, 200) having at least one supporting frame (102, 202), a drawbar (106, 106", 106"', 1061^{IV}, 206) arranged at the front in a main direction of travel (B) and rotatable around at least one drawbar rotation axis (108, 108", 208), a steering device (110, 110", 110"', 110^{IV}, 130, 210, 230, 289, 290) and at least one first steering roller (112, 112", 112"', 112^{IV}, 212) rotatable around a first steering axis (116, 116", 216), at least one second steering roller (114, 114", 114"', 114^{IV}, 214) rotatable around a second steering axis (118, 118", 218) and at least one third steering roller (134, 154, 234a, 234b) rotatable around a third steering axis (138, 238a, 238b), wherein the first steering roller (112, 112", 112"', 112^{IV}, 212) and the second steering roller (114, 114", 114"', 114^{IV}, 214) are formed as forcibly steered steering rollers such that a rotation of the drawbar (106, 106", 106"', 106^{IV}, 206) around the drawbar rotation axis (108, 108", 208) by means of the steering device (110, 110", 110"', 110^{IV}, 130, 210, 230, 289, 290) can be transmitted to the first steering roller (112, 112", 112"', 112^{IV}, 212) to rotate the first steering roller (112, 112", 112"', 112^{IV}, 212) around the first steering axis (116, 116", 216), and to the second steering roller (114, 114", 114"', 114^{IV}, 214) to rotate the second steering roller (114, 114", 114"', 114^{IV}, 214) around the second steering axis (118, 118", 218), **characterized in that**
the third steering roller (134, 154) is essentially freely pivotable around the third steering axis (138),
the first steering axis (116, 116", 216) and the second steering axis (118, 118", 218) are arranged with respect to the main direction of travel (B) one behind the other and are arranged laterally offset with respect to a centre-of-gravity axis (120, 220) extending in the main direction of travel (B) and through a centre of gravity of the trolley (100, 100', 100", 100"', 100^{IV}, 200) through a supporting plane (104, 104", 104"', 204) defined by the supporting frame (102, 202), and the third steering axis (138, 138a, 138b) extends on the side of the centre-of-gravity axis (120, 220) opposite to the first steering axis (116, 116", 216) and the second steering axis (118, 118", 218) through the supporting plane (104, 104", 104"', 204).

2. Trolley according to claim 1, **characterized in that**
a plurality of third steering rollers (134, 154, 234a, 234b) is provided.

3. Trolley according to claim 1 or 2, **characterized in that**
the drawbar (106) can be fastened by at least one fastening means (176, 178) in at least one predetermined rotational position with respect to the drawbar rotation axis (108), in particular relative to the main direction of travel (B), preferably in at least one first rotational position, where a first roller axis (126) of the first steering roller (112) and a second roller axis (166) of the second steering roller (114) and/or a third roller axis of the third steering roller, in particular a first third roller axis of the first third steering roller and a second third roller axis of the second third steering roller extend essentially in parallel to the main direction of travel (B) and/or extend in at least one second rotational position, where the first roller axis (126) and the second roller axis (166) and/or the third roller axis extend in particular essentially perpendicularly to the main direction of travel (B).

4. Trolley according to one of the preceding claims, **characterized in that**
the steering device comprises at least one steering member, such as a chain (110, 110", 110"', 110^{IV}, 210), at least one belt, at least one rope, at least one wire, at least one steel rope, at least one gear drive, at least one transmission shaft and/or at least one linkage, especially a steering linkage.

5. Trolley according to one of the preceding claims, **characterized in that**
the steering device comprises at least one deflecting means, in particular comprising at least one deflecting wheel (188", 188"', 190", 190"', 190^{IV}, 288, 289, 290, 302, 314, 316), a deflecting roller and/or a deflection gearbox, wherein the steering member (110", 110"', 110^{IV}, 210) extending between a first steering element, such as the drawbar (106", 106"', 106^{IV}, 206), the first steering roller (112", 112"', 112^{IV}, 212) or the second steering roller (114", 114"', 114^{IV}, 214), and a second steering element, such as the first steering roller (112", 112"', 112^{IV}, 212), the second steering roller (114, 114", 114"', 114^{IV}, 214), or the drawbar (106", 106"', 106^{IV}, 206), is guided at least in certain areas along a guiding track which deviates from a direct line connecting the first steering element and the second steering element, preferably by means of the deflecting means (188", 188"', 190", 190"', 190^{IV}, 288, 289, 290, 302, 314,316).

6. Trolley according to one of the preceding claims, **characterized in that**
the steering device, in particular the steering member (110, 110", 110"', 110^{IV}), comprises at least one adjusting element (182, 182", 182"', 182^{IV}, 184, 184", 184"', 184^{IV}), which can be used to adjust the relative rotational position of the drawbar (106, 106", 106"', 106^{IV}) around the drawbar rotation axis (108, 108") and of the first steering roller (112, 112", 112"', 112^{IV}) around the first steering axis (116, 116"), of the drawbar (106, 106", 106"', 106^{IV}) around the drawbar rotation axis (108, 108") and of the second steering roller (114, 114", 114"', 114^{IV}) around the second steering axis (118, 118") and /or of the drawbar (106, 106", 106"', 106^{IV}) around the drawbar rotation axis (108, 108"), and/or of the first steering roller (112, 112", 112"', 112^{IV}) around the first steering axis (116, 116"), and of the second steering roller (114, 114", 114"', 114^{IV}) around the second steering axis (118, 118").

7. Trolley according to one of the preceding claims, **characterized in that**
the steering device comprises at least one clamping element (182, 182", 182"', 182^{IV}, 184, 184", 184"', 184^{IV}), in particular comprised by the steering member, in particular by the chain (110, 110", 110"', 110^{IV}) and/or the belt, wherein a length of an element of the steering device (110, 110", 110"', 110^{IV}) is adjustable by means of the clamping element (182, 184), wherein preferably the adjusting element (182, 182"', 182^{IV}, 184, 184", 184"', 184^{IV}) and the clamping element are integrally formed at least in certain areas.

8. Trolley according to one of the preceding claims, **characterized in that**
by a rotation of the drawbar (106, 206) around the drawbar rotation axis (108, 208) having a first direction of rotation the first steering roller (112, 212) is rotatable around the first steering axis (116, 216) having a second direction of rotation, and the second steering roller (114, 214) is rotatable around the second steering axis (118, 218) having a third direction of rotation opposite to the second direction of rotation, wherein the first direction of rotation is preferably identical to the second direction of rotation.

9. Trolley according to one of the preceding claims, **characterized in that**
by means of the steering device (110, 210) a rotation of the drawbar (106, 206) around the drawbar rotation axis (108, 208) is transmittable to the first steering roller (212) and/or the second steering roller (214) at a gear ratio, preferably it is geared down, in particular it is transmitted at a gear ratio greater than 1, it is geared up, in particular at a gear ratio smaller than 1, or directly, in particular at a gear ratio of one, preferably is transmittable to the first steering axis (116, 216) and/or the second steering axis (118, 218).

10. Trolley according to claim 9, **characterized in that**
the gear ratio is not constant across the range of rotation of the drawbar (206) around the drawbar rotation axis (208), in particular it is increasing, preferably not linearly, across the range of rotation at least in certain areas, and/or is decreasing, preferably not linearly, at least in certain areas, and/or in particular by means of the deflection gearbox (296, 298, 304, 310) a rotation of the drawbar (206) is transmittable to the first steering roller (212) and/or the second steering roller (214) representing in particular an inner curve wheel of a trolley movement in a first angular range at a gear ratio smaller than one, and is transmissible to the first steering roller (212) and/or the second steering roller (214) representing in particular an outside curve wheel of a movement of the trolley (200) in a second angular range at a gear ratio of greater than one.

11. Trolley according to one of the claims 2 to 10, **characterized in that**
at least two third steering rollers (134, 154) are connected to the supporting frame (102) through at least one rocker (146), the rocker (102) is preferably rotatable around at least one rocker axis (160) extending at least perpendicularly to the centre-of-gravity axis (120), perpendicularly to the third steering axis (138) and/or parallel to the supporting plane (104).

12. Trolley according to claim 11, **characterized in that**
the rotation of the rocker (146) around the rocker axis (160) can be limited in particular by means of at least one limiting means, wherein the limiting means preferably comprises at least one stop and/or an element of the supporting frame (102).

13. Trolley according to one of the preceding claims, **characterized in that**
the drawbar rotation axis (108, 208) and the centre-of-gravity axis (120, 220) have a common intersection and/or the drawbar (106) is additionally tiltable around a tilting axis (162) essentially perpendicular to the drawbar rotation axis (108), preferably by means of a returning element, such as a spring element (180), biased into a position essentially perpendicular to the supporting plane (104).

14. Trolley according to one of the preceding claims, **characterized in that**
the trolley (100, 100', 200) is configured as a lifting truck, trail car, trailer and/or a push car.

15. Train comprising a plurality of trolleys (100, 100', 200), connected to each other in particular by means of the respective drawbar (106, 206) of each subsequent trolley (100, 100', 200), according to one of the preceding claims.

## Revendications

1. Chariot de transport (100, 100', 100", 100"', 100^{IV}, 200) ayant au moins un châssis de support (102, 202), un timon (106, 106", 106"', 106^{IV}, 206) agencé en amont dans une direction de déplacement principale (B) et pouvant tourner autour d'au moins un axe de rotation de timon (108, 108", 208), un dispositif de direction (110, 110", 110"', 110^{IV}, 130, 210, 230, 289, 290) et au moins une premier roue de direction (112, 112", 112"', 112^{IV}, 212) pouvant tourner autour d'un premier axe de direction (116, 116", 216), au moins une deuxième roue de direction (114, 114", 114"', 114^{IV}, 214) pouvant tourner autour d'un deuxième axe de direction (118, 118", 218), et au moins une troisième roue de direction (134, 154, 234a, 234b) pouvant tourner autour d'un troisième axe de direction (138, 238a, 238b), dans lequel la première roue de direction (112, 112", 112"', 112^{IV}, 212) et la deuxième roue de direction (114, 114", 114"', 114^{IV}, 214) sont réalisées sous la forme de roues de direction à guidage forcé, qu'un mouvement de rotation du timon (106, 106", 106"', 106^{IV}, 206) autour de l'axe de rotation de timon (108, 108", 208) au moyen du dispositif de direction (110, 110", 110"', 110^{IV}, 130, 210, 230, 289, 290) est transférable à la première roue de direction (112, 112", 112"', 112^{IV}, 212) pour faire tourner la première roue de direction (112, 112", 112"', 112^{IV}, 212) autour dudit premier axe de direction (116, 116", 216), et à la deuxième roue de direction (114, 114", 114"', 114^{IV}, 214) pour faire tourner la deuxième roue de direction (114, 114", 114"', 114^{IV}, 214) autour du deuxième axe de direction (118, 118", 218), **caractérisé en ce que**
la troisième roue de direction (134, 154) est agencée pouvant tourner essentiellement librement autour du troisième axe de direction (138),
le premier axe de direction (116, 116", 216) et le deuxième axe de direction (118, 118", 218) s'étendent l'un derrière l'autre par rapport à la direction de déplacement principale (B) et par rapport à un axe barycentrique (120, 220) s'étendant dans la direction de déplacement principale (B) et à travers un centre de gravité du chariot de transport (100, 100', 100", 100"', 100^{IV}, 200) décalé latéralement à travers un plan de support (104, 104", 104"', 204) défini par le châssis de support (102, 202), et
le troisième axe de direction (138, 138a, 138b) s'étend sur le côté de l'axe barycentrique (120, 220) opposé au premier axe de direction (116, 116", 216) et au deuxième axe de direction (118, 118", 218) à travers le plan de support (104, 104", 104"', 204).

2. Chariot de transport selon la revendication 1, **caractérisé en ce que**
une pluralité de troisièmes roues de direction (134, 154, 234a, 234b) est prévue.

3. Chariot de transport selon la revendication 1 ou 2, **caractérisé en ce que**
le timon (106) peut être fixé au moyen d'au moins un dispositif de fixation (176, 178) dans au moins une position de rotation prédéterminée par rapport à l'axe de rotation de timon (108), en particulier par rapport à la direction de déplacement principale (B), de préférence dans au moins une première position de rotation dans laquelle un premier axe de roulement (126) de la première roue de direction (112) et un deuxième axe de roulement (166) de la seconde roue de direction (114) et/ou un troisième axe de roulement de la troisième roue de direction, en particulier un premier troisième axe de roulement de la première troisième roue de direction et un deuxième troisième axe de roulement de la deuxième troisième roue de direction s'étendent essentiellement parallèlement à la direction de déplacement principale (B), et/ou dans au moins une deuxième position de rotation dans laquelle le premier axe de roulement (126) et le deuxièment axe de roulement (166) et/ou le troisième axe de roulement s'étendent en particulier essentiellement perpendiculairement à la direction de déplacement principale (B).

4. Chariot de transport selon l'une quelconque des revendications précédentes, **caractérisé en ce que**
le dispositif de direction comprend au moins un organe de direction, par exemple au moins une chaîne (110, 110", 110"', 110^{IV}, 210), au moins une courroie, au moins un câble, au moins un fil métallique, au moins un câble en acier, au moins une transmission par engrenages, au moins un arbre de transmission et/ou au moins une tringlerie, en particulier une tringle rie de direction.

5. Chariot de transport selon l'une quelconque des revendications précédentes, **caractérisé en ce que**
le dispositif de direction comprend au moins un dispositif de renvoi, comprenant en particulier au moins une roue de renvoi (188", 188"', 190", 190"', 190IV, 288, 289, 290, 302, 314, 316), une poulie de renvoi et/ou une transmission de renvoi, dans lequel de préférence, par l'intermédiaire du dispositif de renvoi (188", 188"', 190", 190"', 190IV, 288, 289, 290, 302, 314, 316), l'organe de direction (110", 110"', 110^{IV}, 210) s'étendant entre un premier élément de direction, tel que le timon (106", 106"', 106^{IV}, 206), la première roue de direction (112", 112"', 112^{IV}, 212) ou la deuxième roue de direction (114", 114"', 114^{IV}, 214), et un second élément de direction tel que la première roue de direction (112", 112"', 112^{IV}, 212), la deuxième roue de direction (114", 114"', 114^{IV}, 214) ou le timon (106", 106"', 106^{IV}, 206), est guidé le long d'une section de guidage, au moins par endroits, qui est différente d'une ligne de liaison directe entre le premier élément de direction et le deuxième élément de direction.

6. Chariot de transport suivant l'une quelconque des revendications précédentes, **caractérisé en ce que**
le dispositif de direction, en particulier l'organe de direction (110, 110", 110"', 110^{IV}), comprend au moins un élément de réglage (182, 182", 182"', 182^{IV}, 184, 184", 184"', 184^{IV}) au moyen duquel la position de rotation relative du timon (106, 106", 106"', 106^{IV}) autour de l'axe de rotation de timon (108, 108") et de la première roue de direction (112, 112", 112"', 112^{IV}) autour du premier axe de direction (116, 116"), du timon (106, 106", 106"', 106^{IV}) autour de l'axe de rotation de timon (108, 108"), et de la deuxième roue de direction (114, 114", 114"', 114^{IV}) autour du deuxième axe de direction (118, 118") et/ou du timon (106, 106", 106"', 106^{IV}) autour de l'axe de rotation de timon (108, 108") et/ou de la première roue de direction (112, 112", 112"', 112^{IV}) autour de premier axe de direction (116, 116") et de la deuxième roue de direction (114, 114", 114"', 114^{IV}) autour du deuxième axe de direction (118, 118"), est réglable.

7. Chariot de transport selon l'une quelconque des revendications précédentes, **caractérisé en ce que**
le dispositif de direction comprend au moins un élément de serrage (182, 182", 182"', 182^{IV}, 184, 184", 184"', 184^{IV}) comprends en particulier en l'organe de direction, en particulier la chaîne (110, 110", 110"', 110^{IV}) et/ou la courroie, dans lequel au moyen de l'élément de serrage (182, 184), une longueur d'un élément du dispositif de direction (110, 110", 110"', 110^{IV}), est réglable, dans lequel de préférence l'élément de réglage (182, 182"', 182^{IV}, 184, 184", 184"', 184^{IV}) et l'élément de serrage sont au moins partiellement formés d'un seul tenant.

8. Chariot de transport selon l'une quelconque des revendications précédentes, **caractérisé en ce que**
par une rotation du timon (106, 206) autour de l'axe de rotation de timon (108, 208) dans un premier sens de rotation, la première roue de direction (112, 212) peut tourner autour du premier axe de direction (116, 216) dans un deuxième sens de rotation, et la deuxième roue de direction (114, 214) peut tourner autour du deuxième axe de direction (118, 218) dans un troisième sens de rotation opposé au deuxième sens de rotation, dans lequel de préférence le premier sens de rotation est identique au deuxième sens de rotation.

9. Chariot de transport suivant l'une quelconque des revendications précédentes, **caractérisé en ce que**
au moyen du dispositif de direction (110, 210), une rotation du timon (106, 206) autour de l'axe de rotation de timon (108, 208) peut être transmise avec un rapport de transmission à la première roue de direction (212) et/ou la deuxième roue de direction (214), de préférence diminuée, en particulaire avec un rapport de transmission supérieur à 1, augmentée, en particulier pour un rapport de transmission inférieur à 1, ou directement, en particulier avec un rapport de transmission de 1, de préférence peut être transmise sur le premier axe de direction (116, 216) et/ou le deuxième axe de direction (118, 218).

10. Chariot de transport selon la revendication 9, **caractérisé en ce que**
le rapport de transmission n'est pas constant sur toute la plage de rotation du timon (206) autour de l'axe rotation de timon (208), en particulier sur la plage de rotation, au moins par endroits, de préférence augmente de façon non linéaire et/ou au moins par endroits, décroît de préférence de façon non linéaire, et/ou en particulier au moyen de la transmission de renvoi (296, 298, 304, 310), une rotation du timon (206), dans une première plage angulaire avec un rapport de transmission inférieur à 1, peut être transmise à la première roue de direction (212) et/ou la deuxième roue de direction (214), constitue en particulier une roue intérieure à la courbe, d'un mouvement du chariot de transport (200), et dans une seconde plage angulaire, avec un rapport de transmission supérieur à 1, peut être transmise à la première roue de direction (212) et/ou la deuxième roue de direction (214), constitue en particulier une roue extérieure à la courbe, d'un mouvement du chariot de transport (200).

11. Chariot de transport selon l'une quelconque des revendications 2 à 10, **caractérisé en ce que**
au moins deux troisièmes roues de direction (134, 154) sont reliées au châssis de support (102) par l'intermédiaire d'au moins une bascule (146), la bascule (146) pouvant de préférence tourner autour d'au moins un axe de basculement (160) s'étendant perpendiculairement par rapport à l'axe barycentrique (120) perpendiculairement par rapport au troisième axe de direction (138) et/ou parallèlement au plan de support (104).

12. Chariot de transport selon la revendication 11, **caractérisé en ce que**
la rotation de la bascule (146) autour de l'axe de basculement (160), en particulier au moyen d'au moins un dispositif de limitation, peut être limitée, dans lequel de préférence le dispositif de limitation comprend au moins une butée et/ou un élément du châssis de support (102).

13. Chariot de transport selon l'une quelconque des revendications précédentes, **caractérisé en ce que**
l'axe de rotation de timon (108, 208) et l'axe barycentrique (120, 220) ont un point d'intersection commun, et/ou le timon (106) peut en outre basculer sur une axe de basculement (162) essentiellement perpendiculaire à l'axe de rotation de timon (108), de préférence au moyen d'un élément de rappel, comme un élément ressort (180) qui est précontraint dans une position essentiellement perpendiculaire au plan de support (104).

14. Chariot de transport selon l'une quelconque des revendications précédentes, **caractérisé en ce que**
le chariot de transport (100, 100', 200) est réalisé sous la forme d'un chariot élévateur, d'une remorque, d'une semi-remorque et/ou d'un chariot à poussée.

15. Train comprenant une pluralité de chariots de transport (100, 100', 200) reliés les uns aux autres, en particulier au moyen du timon respectif (106, 206) d'un chariot suivant (100, 100', 200), selon l'une des revendications précédentes.
